(19) Europäisches Patentamt
European Patent Office
Office européen des brevets

(11) Publication number: **0 379 808 A1**

# (12) EUROPEAN PATENT APPLICATION

(21) Application number: **89313669.7**

(51) Int. Cl.5: **G02B 7/34**

(22) Date of filing: **28.12.89**

(30) Priority: **29.12.88 JP 331748/88**

(43) Date of publication of application: **01.08.90 Bulletin 90/31**

(84) Designated Contracting States: **DE FR GB**

(71) Applicant: **NIKON CORPORATION**
**2-3, Marunouchi 3-chome Chiyoda-ku**
**Tokyo(JP)**

(72) Inventor: **Kusaka, Yosuke**
**1102 Yoshida-cho Totsuka-ku**
**Yokohama-shi Kanagawa-ken(JP)**
Inventor: **Utagawa, Ken**
**634 Noba-cho Konan-ku**
**Yokohama-shi Kanagawa-ken(JP)**
Inventor: **Uchiyama, Shigeyuki**
**36-14-101, Seijo 2-chome**
**Setagaya-ku Tokyo(JP)**
Inventor: **Kuwata, Chiyuki**
**Kuriyamaso Igo 9-10 Midorigaoka 2-chome**
**Meguro-ku Tokyo(JP)**
Inventor: **Yamano, Shozo**
**27-14 Ohi 2-chome**
**Shinagawa-ku Tokyo(JP)**

(74) Representative: **Burke, Steven David et al**
**R.G.C. Jenkins & Co. 26 Caxton Street**
**London SW1H 0RJ(GB)**

## (54) Focus detecting device.

(57) A focus detecting device comprises an image forming optical system, a device for detecting the defocus amount with respect to a predetermined plane of a plurality of images, formed by the image forming optical system, of fields corresponding to a plurality of detection areas which are set beforehand, a device for classifying the plurality of detection areas into a plurality of groups on the basis of the defocus amount, a device for selecting one optimum group from the plurality of groups, and a device for determining one final defocus amount on the basis of the defocus amount corresponding to detection areas belonging to the optimum group.

FIG. 8

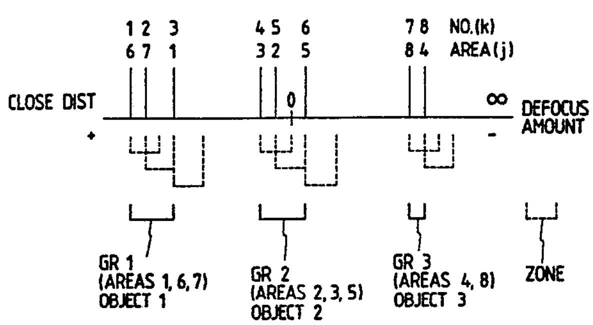


EP 0 379 808 A1

# Focus Detecting Device

## BACKGROUND OF THE INVENTION

### Field of the Invention

This invention relates to a focus detecting detecting device for cameras or the like.

### Description of the Related Art

There is a known focus detecting device which sets a plurality of focus detection areas in a photographic image plane, detects the focus in each of the focus areas, and determines finally one defocus amount on the basis of this plurality of defocus amounts. As examples of determining one defocus amount, there are the following methods.

1. Closest focusing priority method: a method by which the amount of defocus at the closest side among the defocus amounts is chosen.

2. Contrast priority method: a method by which the amount of the defocus in a focus detection area which has the highest contrast and reliability among a plurality of focus detection areas is selected.

3. Statistical average method: a method by which the final amount of defocus according to the statistical average of a plurality of defocus amounts is determined.

such focus detecting devices of the prior art have the following problems.

① Problems of the closest priority method

Since the defocus amount at the closest side is selected from among the amounts of defocus, only the amount of the defocus of one focus detection area deviates greatly from that of the closest side and even when the defocus amounts of other focus detection areas are relatively coherent, a closest object is focused on. For example, when a photographer takes aim at an animal inside a wire gauge as an object, the wire gauge is focused on, which does not satisfy his intentions. When the contrast of a focus detection areas which is selected as the closest and of which a defocus amount is determined is low and the defocus amount scatters each time a focus point is detected, the final amount of the defocus is not stable since it is scattered in response to the defocus amount.

② Problems of the contrast priority method

Since the amount of defocus of the focus detection area where a maximum contrast is formed is adopted, the contrasts of two focus detection areas are substantially the same and the defocus amounts differ greatly. When the focus detection area of the maximum contrast alternates each time a focus is detected, hatching occurs between two defocus amounts and stability is poor. If there is even one focus detection area with a high contrast, an object of a focus detection area with a high contrast is focused on even when the defocus amounts of the other areas are coherent. For example, when the face of a human with a low contrast is viewed against a background with a high contrast, the background is focused and the intentions of the photographer are not satisfied. Further, in a focus detection area with the highest contrast, when the contrast is not very high and the defocus amounts scatter each time a focus is detected, there is no stability since the final amount of the defocus scatter in response to it.

③ Problems of the statistical average method

When the average of the defocus amounts is adopted, then even when a plurality of defocus amounts are split into two groups, it becomes an intermediate amount of defocus, and is out of focus for both groups. For example, when a human in the foreground is viewed against a distant background, neither the far view nor the human is focused.

To sum up the drawbacks of the prior art as described above, when one area is selected from a plurality of divided focus detection areas and the amount of the defocus of the area is adopted as a final amount of defocus, there is a certain probability that an object which a photographer views is focused, but this probability is not sufficient. Also, since the variations in the amount of the defocus are reflected on the variations of the final defocus amount, the stability is poor.

On the contrary, when the average amount of the defocus of a plurality of divided focus detection areas is adopted as the final defocus amount, scattering in the final amount of the defocus is small and the stability is improved. However, the probability that the object at which the photographer takes aim will be in focus is small.

## SUMMARY OF THE INVENTION

An object of the present invention is to provide a focus detecting device in which stability is high and in which the probability that an object at which the photographer takes aim at is focused is increased.

A focus detecting device of the present invention measures the amount of defocus of a current image plane with respect to the predetermined plane of each of a plurality of focus detection areas which are set in a field, groups the plurality of focus detection areas into a plurality of groups according to the amount of defocus of each area, selects from a plurality of groups the one containing the object judged to be of interest, and determines the amount of defocus on the basis of the amount of the defocus of focus detection area belonging to the most appropriate group.

A portion of an object image formed by a photo-taking optical system such as a camera or the like is directed to a focus detector comprising a known focus detection optical system, an image sensor, a microprocessor and the like. The focus detector finds the amount of the defocus of a plurality of focus detection areas by performing a known focus detection arithmetic operation on data of an image sensor corresponding to a plurality of focus detection areas which are set in a photograph image plane, as shown in Figure 5.

A grouping means groups a plurality of focus detection areas into some groups for which the same object seems to have been captured on the basis of the amount of the defocus.

An optimum group selecting means selects an optimum group to which the object which is most probably the object of the photographer's interest belongs from among the plurality of groups.

An optimum defocus amount calculating means calculates the optimum amount of the defocus for the entire system on the basis of the amount of the defocus belonging to the optimum group.

As a result of this, the amount of the defocus is scattered little and stability is obtained.

Even in the case where a plurality of objects exist in a focus detection area in an image plane, they can be identified accurately by grouping in this way. The accurate identification of objects enables the selection results by the optimum group selection process to be matched with the intention of a photographer. The optimum defocus amount is determined by using the defocus amount found in a group which is coherent to a certain degree. So, scatterings are decreased and the results are not wide apart from each result in the group.

## BRIEF DESCRIPTION OF THE DRAWINGS

Figure 1 is a configurational view of a focus detecting device of a camera in accordance with the embodiments of the present invention;

Figure 2 is an explanatory view of a focal focus detection optical system;

Figure 3 is a configurational view of a photoelectric conversion device;

Figure 4 is an explanatory view of a focus detection area:

Figures 5 and 6 are an explanatory view and a flowchart of a focus detection process respectively;

Figures 7 to 16 are views for explaining a grouping process;

Figures 7, 11, 13 and 15 show flowcharts illustrating processes of a first, second, third and fourth embodiment respectively;

Figures 8, 9A, 9B, 10A, 10B, 12, 14, and 16 are explanatory views;

Figure 17 is a flowchart of an optimum group selection process;

Figure 18 is a block diagram illustrating a variation of a display device;

Figure 19 is a flowchart of a calculation process of an optimum defocus amount; and

Figure 20 is a view illustrating the finder image plane of a camera.

DETAILED DESCRIPTION OF THE PREFERRED EMBODIMENTS

Referring to Figure 1, the configuration of the embodiment is explained in which a focus detecting device of the present invention is applied to an interchangeable single-lens reflex camera system.

An interchangeable lens assembly 10 is detachably mounted on a camera body 20. In the state the lens assembly 10 is mounted, the photograph light flux arriving from an object passes through a lens system 11. Some of the light flux are reflected by a main mirror 21 provided on the camera body 20 and directed to a finder. Some of the other light flux penetrates the main mirror 21, are reflected by a submirror 2 and directed to an AF module 23 as a light flux for focus detection.

As shown in Figure 2, the AF module comprises a field box 70, a field lens 27, a detection optical system 24 consisting of two pairs of image reforming lenses 28A and 28B, 38A and 38B, and a photoelectric converter 25 such as a CCD or the like consisting of two pairs of light receiving sections 29A and 29B, 39A and 39B. In the configulation as the above, a light flux passing through each of two pairs of areas 18A and 18B, 19A and 19B included in an exit pupil 16 of the camera lens 11 and symmetric with respect to an optical axis 17 forms a primary image near the vision field box 70 having an opening shape corresponding to the entire focus detection area. Some of the primary image formed on the opening of the vision field box 70 is furthermore formed on two pairs of light-receiving sections 29A and 29B, 39A and 39B by the field lens 27 and two pairs of image reforming lens 28A and 28B, 38A and 38B as two pairs of secondary images.

As is well known, by detecting the relatively positional relation of the secondary image which has become a pair on the photoelectric converter 25 in the positioned direction in the light-receiving sections, the defocus amount of the photography lens 11 can be detected. Also, by detecting this positional relation for each of a plurality of focus detection areas which are set in a photograph image plane, the defocus amount can be detected for each of the focus detection areas.

The configuration of the arrangement of the light-receiving sections on the photoelectric converter 25 is shown in Figure 3.

The light-receiving sections 29A, 29B respectively consist of n pieces of light-receiving elements Ap, Bp (p = 1 to n) and are positioned so that when a primary image coincides with a film plane, outputs of corresponding one pair of light-receiving elements (A1 and B1, A2 and B2, ----- ) becomes equal.

The light-receiving sections 39A, 39B respectively consist of m pieces of light-receiving elements Cq, Bq (q = 1 to m) and are positioned so that when a primary image coincides with a film plane, outputs of corresponding one pair of light-receiving elements (C1 and D1, C2 and D2, -----) becomes equal.

The light-receiving elements constituting light-receiving sections 29A, 29B, 39A and 39B are made up of charge storage type elements such as photodiodes. The operation of storing charges as much as charge storage time corresponding to the illuminance on the photoelectric converter 25 enables a light-receiving element to be controlled to the output level appropriate for a focus detection calculation to be described later.

By arranging a detection optical system as described above, a plurality of focus detection areas AREAS 1 to 8 as shown in Figure 4 are set on a photograph image plane.

Referring back to Figure 1, the explanation will be continued.

A sensor control section 26 receives a charge storage start and termination instruction from the port 4 of an AF-CPU 30 (CPU for AF) and controls the charge storage time of the photoelectric converter 25 by providing a control signal corresponding to the instruction to the photoelectric converter 25. The sensor control section 26 supplies a transfer clock signal or the like to the photoelectric converter 25 and transfers a light-receiving element output signal to the AF-CPU 30 chronologically, as well as to send a synchronization signal in synchronization with the transfer start of a light-receiving element output signal to the port P4 of the AF-CPU 30. The AF-CPU 30 starts A/D conversion of output signals from an light-receiving element which is input to the port P3 from an A/D converter synchronously with this signal and obtains A/D conversion data corresponding to the number of light-receiving elements. At the completion of the A/D conversion, data processing is performed on the obtained data to determine the optimum defocus amount.

That is, the operations of the present invention-focus detection, grouping, optimum group selection and optimum defocus amount calculation are achieved by the programs of the AF-CPU 30.

The AF-CPU 30 controls the display configuration of the display sections 41, 42, 43 and 44 of a display device 40 by using the port P5 on the basis of the optimum defocus amount.

The AF-CPU 30 also moves the lens system 11 to the best-focus position by controlling the driving direction and the driving amount of a motor 50 on the basis of the optimum defocus amount as in the following.

First, the AF-CPU 30 generates a signal used to cause the motor 50 to rotate in the direction in which

the lens system 11 approaches the best-focus position, from the port P2 according to the code of the defocus amount (front pin, back pin). The rotational motion of the motor 50 is transmitted to the body 20, the coupling 53 at the body side provided in the mount side of the lens assembly 10 and the coupling 14 which fits to this at the lens side, further it passed through the transmission system 12 made up of gears or the like which are incorporated in the lens assembly 10 and finally it causes the lens system 11 to move in the direction of the best-focus position.

The driving amount of the motor 50 causes the rotational amount of gears or the like constituting a transmission system 51 to be converted into a pulse train signal by an encoder 52 made up of a photointerrupter or the like. The pulse train signal is fed back to the port P1 and the AF-CPU 30 detects the driving amount of the motor 50 and controls it by counting the number of pulses.

The lens assembly 10 has a lens CPU 13 built in, which is connected to the AF-CPU 30 by means of a port P6 via a communication bus 64 formed of a lens-side contact point 15 provided on the mount side and a body-side contact point 63, and AF related information of the lens assembly 10 is sent to the AF-CPU 30.

A mode selection device 80 sends the information of focus detection modes (center weighted, closest priority, reliability priority, focus driving time priority and the like) selected automatically or manually to the port P7, and the AF-CPU 30 switches the methods of focus detection processes on the basis of the information.

An exposure control device 90 measures the brightness of a field, drives and controls the aperture 91 of a photograph lens so as to obtain a proper exposure. F value information of a lens is input to the port P8 of the AF-CPU.

The above description is the summary of the configuration and operations of the embodiments.

The details of focus detection, grouping, optimum group selection and the calculation of the optimum defocus amount with respect to a plurality of areas which are performed inside the AF-CPU 30 will now be explained.

(Focus Detection Process)

First, the focus detection process will be explained with reference to Figures 5 and 6.

The light-receiving element output data corresponding to light-receiving elements Ap, Bp (p = 1 to n) and Cq, Dq (q = 1 to m) which are obtained by A/D conversion are expressed as ap, bp (p = 1 to n) and cq, dq (q = 1 to m). For simplicity, the explanation is only on the light-receiving element output data ap, bp. The same applies to the light-receiving element output data cq, dq. A correlation amount C (j, L) of light-receiving element output data cq, dq is determined for each of the detection areas by a correlation calculation shown in equation (1).

$$C(j, L) = \sum_{r} |a(r + L) - b(r)| \qquad (1)$$

Where, L is an integer and indicates a relative shift amount (deviation amount) in units of pitches of the light-receiving elements of a pair of light-receiving element output data; j indicates a focus detection area. In the integrating calculation of equation (1), the range of the parameter r is properly determined according to the shift amount L and the detection area j.

When the light-receiving output data ap, bp are made to correspond to a matrix, for example, as shown in Figure 5, the combination of light-receiving output data in equation (1), namely the range of the parameter r can be determined. In Figure 5, a shift amount L is made to vary in the range of -2 to +2 and the area surrounded by a thick line indicates the position on the matrix of a combination of light-receiving element output data on which correlation arithmetic operation is performed.

When the shift amount L is 0, for example, the range of the parameter r of equation (1) is as follows for each detection area j.

When j = 1, r = 1 to w
When j = 2, r = w + 1 to x
When j = 3, r = x + 1 to y
When j = 4, r = y + 1 to z
When j = 5, r = z + 1 to n (2)

The shift amount xm (j) which has the highest correlation of light-receiving element output data in each detection area can be determined by applying the method disclosed in U.S. Patent No. 4,561,749 to the result of equation (1).

$$xm(j) = x + \frac{D(j)}{SLOP(j)} \quad --- \quad (3)$$

However, if it is assumed that the minimum value of the correlation amount C (j, L) determined discretely is found in the shift amount L = x, D and SLOP in equation (3) can be determined by the following equations.

$$D(j) = \frac{C(j,x-1) - C(j,x+1)}{2} \quad --- \quad (4)$$

SLOP (j) = MAX(C(j,x+1) - C(j,x),
C(j,x-1) - C(j,x)) (5)

The defocus amount DEF (j) for each detection area can be determined by the following equation from the shift amount xm (j) found in equation (3).

DEF (j) = KX(j) x PY(j) x xm(j) + CZ(j) (6)

In equation (6), PY (j) is a pitch in the direction in which light-receiving elements are positioned for each detection area. A value corresponding to an area (in the case where sensor pitches in the vertical and horizontal directions differ) is stored in the AF-CPU 30. KX (j) is a coefficient which is determined for each detection area by the arrangement of the detection optical system of Figure 2. A value corresponding to the area is stored in the AF-CPU 30. CZ (j) is an offset value for each area, consisting of an aberration amount of a photograph optical system (read from the lens CPU 13) and a correction value (stored in EEPROM (electrically erasable and programmable ROM) for each body) determined by the position adjustment state of the AF module 23 with respect to the body 20.

The parameter SLOP (j) determined in equation (5) is an amount substantially proportional to the contrast of an object image. The greater its value, the deeper the offset in the vicinity of the minimum value of the correlation amount C (j, L) indicating that its correlation is large. Therefore, the reliability of the defocus amount DEF (j) obtained is high.

In cases where the minimum value xm (j) cannot be found and the defocus amount DEF (j) can not be defined, or the defocus amount DEF (j) is determined but SLOP (j) is small and the reliability is low, it is judged focus detection cannot be made and DEF (j) = ∞ is set.

Figure 6 is a flowchart illustrating the operation of the above-mentioned focus detection process.

First, in step #95, j is set at 1 to initialize a focus detection area. In step #100, a correlation operation is performed by the focus detection area AREA (j) to find the correlation amount C (j, L). In step #105, xm (j) and SLOP (j) are determined according to equations (3) and (5). In step #110, it is judged whether xm (j) is determined. When xm (j) is not determined, the operation proceeds to step #125; when it is determined, it is then judged whether SLOP (j) is above a predetermined value TS in step #115. When it is below TS, i.e., it is judged that there is no reliability, the operation proceeds to step #125. When SLOP (j) is judged greater than TS in step #115, the operation proceeds to step #120 where the defocus amount DEF (j) is determined and the operation then proceeds to step #130. On the other hand, when the operation proceeds to step #125, it is judged that focus detection cannot be made and DEF (j) = ∞ is set and the operation proceeds to step #130. In step #130, j = j + 1 is set and focus detection area is updated to the next area. In step #135, it is judged whether j = 9. In the case of j ≠ 9, the operation returns to step #100 where a correlation operation is performed by the next detection area. In the case of j = 9 in step #135, since focus detection for all the areas are finished, the operation skips a focus detection process and proceeds to the grouping process of step #140.

As described above, defocus amounts can be determined in all the detection areas. In the above-mentioned explanation, a cross-shaped detection area shown in Figure 4 is divided into eight portions and the defocus amount of each area is detected. However, the shape and the number of divisions of a detection area are not limited to this. No problem arises if detection areas are overlapped or the boundaries of the areas are changed according to the distribution of the intensity of an object image.

(Grouping Process)

The grouping process groups a plurality of detection areas into a group which is highly probably to have captured the same object according to a plurality of defocus amounts determined by a focus detection process.

Figure 7 is a flowchart showing a first embodiment of the grouping process.

First, in step #200, as shown in Figure 8, detection areas are sorted in the ascending order of the defocus amount of the area (in the order of near closest) and number k is numbered beginning in sequence with 1. However, areas in which detection cannot be made (defocus amount DEF (j) = ∞) are not numbered, and when detection cannot be made in all the areas, the number k is set to 0. The last number is set to KL. Accordingly, the case of KL = 0 indicates that detection cannot be made in all the areas.

In step #205, it is judged whether KL = 0, that is, whether detection cannot be made in all the areas. When detection cannot be made, the operation proceeds to step #210. It is regarded that detection cannot be made in all the areas and subsequent processes are cancelled, and therefore, the next focus detection operation is started. When detection can be made, in step #215, the size of the zone on the defocus axis used in the grouping process, namely, the depth of the field which can be regarded as the same object, is determined as follows:

Example 1: The depth of a field varies according to the F-number of a photo graph optical system at the time of photo-taking. When the F-number is small, the depth is also greater and the size of the zone which can be regarded as the same object is spread, so the size of the zone is determined according to the photograph F-number.

Example 2: The size of a zone is fixed to a predetermined value and an image plane regarded as the same object is made to enter within a fixed depth at all times.

Example 3: The defocus amount determined in the above-mentioned detection process has a certain range of uncertainty. The range varies depending on the reliability of the defocus amount SLOP value or on the contrast of an object image in that area. For example, the range of uncertainty is generally inversely proportional to the reliability SLOP, therefore the size of a zone is determined in proportion to the inverse number of the SLOP value of the area. When the size of a zone is determined in this way, the possibility that an area having a highly reliable defocus amount will form a group separate from the other areas becomes high. The probability that the object image which the area captures is focused becomes high. For example, a predetermined zone width is denoted by ZN and the size of the zone of each area is ZONE (J) = ZN / SLOP (j). In this case, the upper and lower limit values of an area may be set. The contrast CON (j) is determined by calculating the sum of absolute values of the difference between neighboring light-receiving element output data within the area, and this sum may be used in place of the SLOP value.

In step #220, for initialization of a grouping process, the group number i and the number k of an area in the order of defocus are both set at 1. In step #225, the area of number k is entered to group GR (i). In step #230, it is judged whether the number k has become the last number KL. In the case of "yes", the grouping process is terminated and the operation proceeds to step #235 of an optimum group selection process in Figure 17. In the case of "no", the grouping process is continued and the operation proceeds to step #240.

When the size of a zone is determined according to example 1 or 2 in step #215, it is judged in step #240 whether the defocus amount of the area of the number k+1 falls within the zone of the infinite side from the defocus amount of the area of number k. In the case of Figure 9A, for example, the two areas 7 and 1 are judged to be out of zone and become the same group. When the zone size is determined as in example 3, it is judged whether the difference between the defocus amount of the area of number k and the defocus amount of the area of number k+1 is smaller than the sum of the zone size determined by the SLOP value of the area of number k+1. In the case of Figure 10A, for example, the two groups 7 and 1 are judged out of the zone and become separate groups. In the case of Figure 10B, the two groups 7 and 1 are judged to be within the zone and become the same group.

When it is judged that they are separate groups in step #240, group numbers are updated in step #245 and the operation proceeds to step #250. When it is judged that they are the same group, step #245 is skipped and the operation proceeds directly to step #250. In step #250, the number k is updated, after which the operation returns to step #225.

When the above process is repeated and the operation proceeds to step #235, grouping of areas has been done, for example, as in Figure 8. In other words, in the case of the first embodiment of the grouping process, the spread of one group on the defocus axis is flexible. When a plurality of areas exist in a group, one area belonging to the group should be in such a relationship with at least another one area as in Figures 9B and 10B. In such grouping, since the great spread of groups can be achieved, the entire object can be captured as one group even when an object whose focus point position varies continuously in a

wide area like a poster put up on a wall seen from a diagonal direction. Of course, a certain upper-limit may be provided on the spread of a group or when the sum of the SLOP value of the area added to a group reaches a certain value, the group may be updated.

Figure 11 is a flowchart of a second embodiment showing a grouping process.

The processes from step #300 to step #315 are the same as the processes from step #200 to step #215 of the first embodiment in Figure 7, so the explanation is omitted. On the occasion of determining the zone size in step #315, however, the case of example 3 is excluded.

In step #320, for initialization of a grouping process, a group number is set at 1, and the top number k, the last number h and the end number g of an area in a defocus order are all set at 1. In step #325, it is judged whether the defocus amount of the area of number h falls within the zone of the infinite side from the defocus amount of the area of number k. For example, in the case of Figure 9A, it is judged that the two areas are out of zone and become separate groups. In the case of Figure 9B, it is judged that the two areas are within the zone and they become the same group. When it is judged that they do not belong to the same group, zone judgment is terminated and the operation proceeds to step #340. When it is judged that they belong to the same group, the last number h is updated in step #340. In step #335, it is judged whether the last number h exceeds the end number. In the case of "no", the operation returns to step #325, where zone judgment is continued. In the case of "yes", the zone judgment is terminated and the operation proceeds to step #340.

In step #340, it is judged whether the last number h become g, namely, whether this group is falls within the last group. In the case of "no", the area from the top number k to the last number h-1 falls within the group i and the group number i is updated in step #345 and the operation proceeds to step #350. In the case of "yes", group registration in step #345 is not performed and the operation proceeds to step #350. In step #350, it is judged whether the last number h exceeds the end number KL. In the case of "yes", the grouping process is terminated and the operation proceeds to the optimum group selection process of step #355. In the case of "no", the top number k is updated in step #360 and the end number g is rewritten to the last number h and the operation returns to step #325 where the grouping process is continued.

The above process is repeated and when the operation branches to step #355, a grouping process has been performed, for example, as in Figure 12. That is, in the case of the second embodiment of the grouping process, the spread of one group on the defocus axis is fixed. When a plurality of areas exist in a group, any two areas among the areas belonging to the group satisfy such a relationship as that in Figure 9B. In such grouping, since the spread of groups can be relatively narrowly limited, the grouping of objects which is finer and more accurate than that of the first embodiment can be achieved.

Figure 13 is a flowchart showing a third embodiment of the grouping process.

The processes from step #400 to step #415 are the same as the processes from step #200 to step #215 of the first embodiment in Figure 7, so the explanation is omitted.

In step #420, for initialization of the grouping process, the group number i is set at 1. In step #425, an area number j is set at 1. In step #430, it is judged whether the defocus amount DEF (j) falls within ± ZONE (example 1 or 2 for zone size), ±ZONE (i) or ±(ZONE (i) + ZONE (j)) (example 3 for zone size) around the defocus amount of the area of number i. In the case of "yes", it is judged that they belong to the same group. In step #445, the area of number j is entered into the group GR (i) and the operation proceeds to step #450. In the case of "no", it is judged that they do not belong to the same group. Grouping registration in step #445 is not performed and the operation proceeds to step #450. In step #450, it is judged whether the area number j has become 9, namely, whether it is an end area. In the case of "no", the area number j is updated in step #455 and the operation returns to step #430 where the group judgment is continued. In the case of "yes", it is judged in step #460 whether the group number i has reached the end number KL, namely, whether it is an end group. In the case of "no", the group number i is updated in step #465 and the operation returns to step #425 where the group judgment is started again. In the case of "yes", the grouping process is terminated and the operation proceeds to step #470 where the group selection process in Figure 17 is performed.

The above process is repeated and when the operation branches to step #470, the areas have been grouped, for example, as in Figure 14. That is, in the case of the third embodiment of the grouping process, the spread of one group on the defocus axis is determined with the defocus amount of a certain area which is the center as a reference. When a plurality of areas exist in a group, all the areas belonging to the group satisfy such a relationship as that in Figure 9B or 10B with respect to the center area. In such grouping, the spread of groups is relatively narrowly limited with the defocus amount of the area which is a reference as the center and the grouping of objects which is more fine and accurate is achieved.

Figure 15 is a flowchart showing a fourth embodiment of the grouping process.

The processes from step #505 to step #515 are the same as the processes from step #205 to step

#215 of the first embodiment in Figure 7, so the explanation is omitted.

In step #520, for initialization of the grouping process, the group number i and the area number j are both set at 1. In step #525, it is judged whether the defocus amount DEF (j) of the area j is, namely, whether focus detection of the area j can be made. In the case of "yes", the area j is entered into the group (i) in step #530 and the operation proceeds to step #535. In the case of "no", the group registration of step #530 is not performed and the operation proceeds to step #535.

In step #535, it is judged whether the area j is 8, namely, whether it is an end area. In the case of "yes", the operation branches to the process of step #565 or those that follow. In the case of "no", the operation proceeds to step #540. In step #540, it is judged whether the defocus amount DEF (j) of the area j is ∞, namely whether focus detection of the area j can be made. In the case of "yes", the operation proceeds to step #545. In the case of "no", the group judgment of step #545 or those that follow is not performed and the operation proceeds to step #560.

In step #545, it is judged whether the area j is 5, namely, whether the area is the end area of the horizontal row. In the case of "yes", since it is the end area, the group judgment of step #550 is not performed and the operation proceeds to step #555 where the group is updated. In the case of "no", in step #550, it is judged whether the defocus amount DEF (j+1) of the adjacent area j+1 falls within ± ZONE, ± ZONE (j) or ± (ZONE (j) + ZONE (j+1)) with the defocus amount DEF (j) of the area j as the center. In the case of "yes", it is judged that they belong to the same group. The group update of step #555 is not performed and the operation proceeds to step #560. In the case of "no", it is judged that they do not belong to the same group. The group number i is updated in step #555 and the operation proceeds to step #560.

In step #560, the area number j is updated and the operation returns to step #525 where group judgment is started again.

The above process is repeated and when the operation branches to step #565, it is judged whether the defocus amount DEF (7) which is the center area of the vertical row falls within ± ZONE, ± ZONE (3) or ± (ZONE (3) + ZONE (7)) with the defocus amount DEF (j) of the area 3 which is the center area of the horizontal row as the center. In the case of "yes", the group to which the area 7 belongs is absorbed into the group to which the area 3 belongs.

In step #570, the average value of the defocus amounts of the areas constituting the group is calculated. The group number is renumbered in a closest order according to the value and the operation proceeds to the group selection of step #575.

The above process is performed as described above and when the operation branches to step #575, a grouping process for areas has been performed, for example, as shown in Figure 16. That is, in the case of the fourth embodiment of the grouping process, the spread of one group on the defocus axis is flexible. When a plurality of areas exist in a group, all the areas belonging to the group is always in such a relationship as that in Figure 9B or 10B with at least one of the areas adjacent to the area. In such grouping, the same groups always form a continuous area on an image plane. When objects are the same, the probability that they are captured in a continuous focus detection area is high, thus the correspondence between a group and an object is improved and the identifiability of an object is increased.

(Optimum Group Selection Process)

In the optimum group selection process, one group with a high probability that an object which a photographer has an interest is captured is selected from among a plurality of groups made by a grouping process.

Figure 17 is a flowchart of the optimum group selection process.

In step #600, the area point E (j) of each focus detection area is determined on the basis of the information obtained from a mode selection device 80 as in table 1.

That is, in the case of the center weighed mode, 1 is provided to only the area close to the center among the entire focus detection areas as an area point unless a focus detection cannot be made and the area point of the ohter areas is set at 0 so that the result of the focus detection is not be affected. The priority of the area in that instance is set as the following order of (area 3, 7) → (area 2, 4, 6, 8) → (area 1, 5).

In table 1, an area point is set so that a detection area moves to the end area in turn when the center area cannot be detected. However, the area point may be set so that detection is performed only in the center area or the shift of a detection area is stopped on the way.

In the other detection modes (closest priority, reliability priority and focusing priority), an area point 0.5

is provided to the end area of the horizontal and vertical row (areas 1, 5, 6 and 8) and an area point 1 is provided to the central area (areas 2, 3, 4 and 7). The chance of an object going in and out in the end area is high due to a camera shake or the like. This possibly causes the results of a focus detection to fluctuate. Therefore, the area point of the end area is set lower than that of the central area.

In step #605, the group number i is initialized to 1. In step #610, a group defocus amount GDEF (i) is calculated for each group from the defocus amount of the area belonging to the group in the following manner. For example, suppose that areas 2, 3 and 4 belong to group 1 and the group defocus amount is respectively denoted by DEF (2), DEF (3) and DEF (4), then the group defocus amount GDEF (1) is as in equation (7):

GDEF(1) = (DEF(2) + DEF(3) + DEF(4))/3, or

GDEF(1) = (DEF(2) * E(2) + DEF(3) * E(3) + DEF (4) * E(4))/(E(2) + E(3) + E(4)) (7)

That is, the group defocus amount is determined as the arithmetic average of the defocus amounts of the areas belonging to the group or as a weighted average with an area point as a weight. When the sum of the area points is 0 at the time of finding as a weighted average, the group defocus amount DEF (j) is regarded as impossible to detect.

In step #615, the closest priority point P1 (i) is determined for each group on the basis of the group defocus amount of the group. In the case where the focal point detection mode is the closest priority mode, as shown in table 1, the closest priority point 1 is given to the group whose group defocus amount is a maximum or most closest, and a point $\alpha(0 < \alpha < 1)$ or 0 is given to the other groups. The higher the closest priority is, the smaller the value of $\alpha$ is set. A predetermined value $\alpha$ is given to the other groups in table 2-1. However, the degree of closest may be calculated according to the order of the defocus amount and the deviation from the closest group and a different closest priority point P1 may be given to each group.

In the other detection modes (center weighted, reliability priority and focusing priority), as shown in table 2-2, a closest priority point 0 or 1 is given to a group according to the possible/impossible of the detection of the group defocus amount. Therefore, if the detection of the group defocus amount is possible, a point is given uniformly. It follows that each group is fairly treated regardless of the value of the group defocus amount.

The setting of the closest priority point p1 as mentioned above gives the closest group a priority in the closest priority mode and in the other modes, the closest group will not be given a priority.

In step #620, a focusing priority point P2 is determined for each group on the basis of the group defocus amount of the group. When the focal point detection mode is a focal point priority mode, for example, as shown in table 3-1, a focusing priority point 1 is given to the group which the group defocus amount is at a minimum, namely, closest to a best-focus state and a point $\beta$ $(0 < \beta < 1)$ or 0 is given to the other groups. The higher the focusing priority is, the smaller the value of $\beta$ is set. A predetermined value $\beta$ is given to the other groups in table 3-1. However, the degree of closeness to a best-focus state may be calculated according to the magnitude of the absolute value or the order of the defocus amounts and a different focusing priority point may be given to each group.

In the other detection modes (center weighted, reliability priority, and closest priority), as shown in table 3-2, a focusing priority point 0, $\gamma$ or 1 is given to a group according to the absolute value of the group defocus amount in the same manner as in the above-mentioned table 3-1. $\gamma$ is set at $\beta < \gamma < 1$. By giving a certain degree ot priority to a group close to a best-focus state the modes except the focusing priority mode in this way, stability in the vicinity of a focal point can be increased.

As mentioned above, by setting a focusing priority point P2, a group closest to a best-focus state is given priority in the focusing priority mode and stability is improved in the other groups.

In step #625, a reliability point P3 is determined for each group on the basis of the reliability SLOP (j) of the defocus amount of the area j belonging to the group. When the focus detection mode is reliability priority mode, for example, as shown in table 4-1, a reliability priority point 1 is provided to the group which has the greatest sum of reliabilities and a point (0 < point < 1) is provided to the other groups according to the amount which the sum of the reliabilities of the group is divided by the maximum value of the sum of the reliabilities.

In the other detection modes (center weighted, closest priority, and focusing priority), a reliability point 0 or 1 is provided to a group only depending on whether the detection of the group defocus amount is possible or impossible, as shown in table 4-2. If the detection of a group defocus amount is possible, a point is provided uniformly. Therefore, each group is treated fairly regardless of the size of the sum of the reliabilities of the areas belonging to the group.

Furthermore, in the other detection modes, a reliability point shown in table 4-3 may be provided. In this case, if the sum of the reliability of the group is above a predetermined value $\delta$, a reliability point 1 is provided uniformly and if it is below $\delta$, a reliability point is provided according to the amount which the sum

of the reliability is divided by δ. Groups having some degree of reliability are treated fairly even in the modes except the reliability priority mode in this way and groups having a low reliability are treated by weighting according to the reliability, with the result that the influence of variations due to the uncertainty of the defocus amount can be decreased.

As mentioned above, by setting a reliability point P3, the group having the highest reliability is given priority in the reliability priority mode and stability is improved in the other modes.

In step #630, the total point PG of each group is calculated as the product or sum of a closest priority point P1, a focusing priority point P2 and a reliability point P3. In step #635, the group number i is updated. In step #640, it is judged whether the group number i has become KL+1, namely, whether the group number is at the end. In the case of "no", the operation returns to step #610 where the process of finding the total point of the next group is performed following the last process. The above process is repeated and when the process for the group is finished, the operation proceeds to step #645 where the group having the greatest total PG (i) is selected as an optimum group and proceeds to the optimum defocus amount calculation of step #650 in Figure 19.

In the above-mentioned optimum group selection process, a point according to a plurality of selection rules (center weighted, closest priority, focusing priority, and reliability priority) is set. a point with respect to a plurality of selection rules is determined in each group and finally a group having the greatest total point is selected. Therefore, this process has the following advantages.

(a) The strength of the effect of selection rule (degree of priority) can be controlled easily without modifications of a program or the like by changing the point value properly in the same rule.

(b) The strength between selection rules (degree of priority) can be controlled by changing properly the balance of point values among different rules. Therefore, it is not necessary to provide a program for selection separately in each focus detection mode. This system can be used even when a focus detection mode is changed only by changing a point value.

(c) Since a point is set for each selection rule and the selection of an optimum group is made by the product or sum of those points, different rules can easily be used in combination. Also, a new rule can be added easily. For example, when the spread of an area is added to the selection rules, an area point P4 is set and a point value corresponding to the number of the areas belonging to a group should be given. In the case of a specific pattern, e.g., a so-called drop-out pattern, to prevent the drop-out, a drop-out point P5 is set and drop-out judgment (juges whether the end areas 1 and 5 of a horizontal row belong to the closest group) is performed. In the case of a drop-out pattern, only the drop-out point of the closest group is set at 1 and in the case of not drop-out pattern, the drop-out point of all the groups should be set at 1.

As described above, by introducing an optimum group selection method according to a point system, this system can respond flexibly to the change and addition of modes or optimization of a selection rule.

In the above explanation, finally one optimum group is selected. However, as shown in Figure 18, a photographer may be made to confirm the area belonging to the selected group by displaying the area position belonging to the group using the liquid crystal display positioned within the finder vision field 100. In this case, it may be arranged in such a way that a changeover switch 101 connected to the port P9 of the AF-CPU is provided and if the object which an photographer has an interest is not within the area displayed, the selected group is cancelled by the photographer operating the switch 101, and a group which has a total point which is large next is selected in turn.

In the above explanation, the method of allocating numerous kinds of points is changed according to a selected focus detection mode. However, a photographer may directly set a point, or a point may be set by means of ROM data in which a point has previously been set and ROMs are arranged to be capable of being changed with respect to the body and a point may be changed by replacing the ROM. A point is not fixed and learning capabilities may be provided such that the characteristics of the finally selected group (position of the area, the group defocus amount, contrast or the like) are fed back so that the point value is changed so as to satisfy the intention of the photographer.

The above is one example of the optimum group selection process. Of course, it does not matter to select an optimum group according to a technique except this process. For example, the absolute distance of each group may be concluded from the defocus amount and the absolute distance of a photograph lens and the optimum distance and a group may also be determined on the basis of the difference between the closest and most far distance. Also, the focus detection mode can be changed or an optimum group can be selected according to the distance distribution pattern of areas or groups.

(Optimum Defocus Amount Calculation Process)

In the optimum defocus amount calculation process, an optimum defocus amount as a whole is calculated on the basis of the defocus amount of a focus detection area belonging to an optimum group selected by the optimum group selection process.

Figure 19 is a flowchart showing the optimum defocus amount calculation process.

In step #900, a weight W (j) with respect to the focus detection area AREA (j) belonging to an optimum group is determined. For example, as shown in table 5, a weight W (j) can be determined according to the focus detection mode. In the reliability priority mode, the weight W (j) of the focus detection area AREA (j) is defined as the product of the area point E (j) and the reliability SLOP (j) of the defocus amount of the area. In the other modes, when E (j) * SLOP (j) is above a predetermined value V, the weight W (j) is set at 1 and when it is smaller than the predetermined value V, the weight W (j) is set at E (j) * SLOP (j). By setting in this way, weighting according to the reliability is made in the case of the reliability priority mode and in the other modes, an equivalent weighting is made if there is a certain reliability. In step #905, the optimum defocus amount DEFX is calculated as in equation (8) with the defocus amount DEF (j) of a focus detection area belonging to an optimum group as a weighted average which is weighted by the weight W (j).

$$DEFX = \sum_{j}(W(j) * SLOP(j)) / \sum_{j}(W(j)) \quad (8)$$

where, j in equation (8) is the number of the focus detection area belonging to the optimum group. By adopting a weighted addition average, the scatterings of the optimum defocus amount can be reduced and stability is increased.

In step #910, the display configuration of the AF display device 40 is controlled on the basis of the optimum defocus amount as well as the driving amount of an Af motor 50 is controlled and the photograph lens 11 is driven to a best-focus position. As a result of this, an object in focus will be formed on the focus detection area belonging to the optimum group on a photograph image plane. At the termination of the process of step #910, the operation proceeds to the next focus detection cycle again.

In the above-mentioned embodiment, the explanation is made by assuming that a plurality of focus detection area are set in the form of a cross on the image plane as shown in Figure 4. However, of course, a focus detection area may be set in a form other than this, and a detection may be set in a two-dimensional form. The present invention is not limited to a focus detecting device of the TTL system and can be applied to a focus detecting device of an external light system. In that case, an object distance can be obtained from a plurality of focus detection areas set in an image plane instead of a defocus amount. It follows that the above-mentioned grouping process, the optimum group selection process, and the optimum distance calculation process should be performed on object distances. The above-mentioned optimum group selection process and the optimum defocus amount calculation process will be explained about a specific object.

As shown in Figure 20, among a plurality of focus detection areas set on a photograph image plane, a human enters the focus detection areas 1, 2, 3, 6, 7 and 8 and distant trees or buildings enter the focus detection areas 4 and 5. In such situation, the defocus amount DEF (j) and the reliability SLOP (j) in each focus detection areas are determined as shown in table 6-1. The focus detection areas 1, 2, 3, 6, 7 and 8 are grouped into a group GRP (1) and the focus detection areas 4 and 5 are grouped into a group GRP (2).

If the following are set; $\alpha = 0.5$ in table 2-1, $\beta = 0.8$ in table 3-1, $\gamma = 0.5$ in table 3-2 and $V = 300$ in table 5, then the group defocus amount, the closest priority point P1, the focusing priority point P2, the reliability priority point P3 and the total point PG with respect to groups 1 and 2 are calculated as shown in table 6-2 in each focus detection mode. In each focus detection mode, group 1 which has the largest total point PG is selected as the optimum group, and finally the optimum defocus amount is determined as shown in table 6-2.

Table 1

| Area Point | | | | |
| --- | --- | --- | --- | --- |
| Focus Detection Mode | Center Weighted Mode | | | Other Modes |
| | Detection of Areas 3, 7 Possible | Detection of Areas 3, 7 Not Possible | | |
| Area Point | | Detection of Areas 2, 4, 6, 8 Possible | Detection of Areas 2, 4, 6, 8, Not Possible | Closest Priority Mode<br>Reliability Priority Mode<br>Focusing Priority Mode |
| E (1) | 0 | 0 | 1 | .5 |
| E (2) | 0 | 1 | 0 | 1 |
| E (3) | 1 | 0 | 0 | 1 |
| E (4) | 0 | 1 | 0 | 1 |
| E (5) | 0 | 0 | 1 | .5 |
| E (6) | 0 | 1 | 0 | .5 |
| E (7) | 1 | 0 | 0 | 1 |
| E (8) | 0 | 1 | 0 | .5 |

Table 2-1

| Closest Priority Point | | | |
| --- | --- | --- | --- |
| Focus Detection Mode | Closest Priority Mode | | |
| | Detection of GDEF (i) Not Possible | Detection of GDEF (i) Possible | |
| Closest Priority Mode | | GDEF (i) not at maximum | GDEF (i) at maximum |
| P1 (i) | 0 | α | 1 |

Table 2-2

| Closest Priority Point | | |
|---|---|---|
| Focus Detection Mode | Other Modes (Center Weighted, Focusing Priority, Reliability Priority) | |
| Closest Priority Point | Detection of GDEF (i) Not Possible | Detection of GDEF (i) Possible |
| P1 (i) | 0 | 1 |

Table 3-1

| Focusing Priority Point | | | |
|---|---|---|---|
| Focus Detection Mode | Focusing Priority Mode | | |
| | Detection of GDEF (i) Not Possible | Detection of GDEF (i) Possible | |
| Focusing Priority Point | | $\lvert GDEF (i) \rvert$ not at minimum | $\lvert GDEF (i) \rvert$ at minimum |
| P2 (i) | 0 | β | 1 |

Table 3-2

| Closest Priority Point | | | |
|---|---|---|---|
| Focus Detection Mode | Other Modes (Center Weighted, Focusing Priority, Reliability Priority) | | |
| | Detection of GDEF (i) Not Possible | Detection of GDEF (i) Possible | |
| Focusing Priority Point | | $\lvert GDEF (i) \rvert$ not at minimum | $\lvert GDEF (i) \rvert$ at minimum |
| P2 (i) | 0 | γ | 1 |

Table 4-1 Reliability Point

| Focusing Detection Mode / Reliability Point | Reliability Priority Mode | |
|---|---|---|
| | Detection of GDEF (i) not Possible | Detection of GDEF (i) Possible |
| P3 (i) | 0 | 1 is given to GSMAX<br>GSLOP(i)/GSMAX is given to others.<br>$GSLOP(i)=\sum_{j}(E(i)*SLOP(j))$<br>where, j are areas belonging to group i and GSMAX is a maximum value of GSLOP (i) |

Table 4-2

| Reliability Point | | |
|---|---|---|
| Focus Detection Mode | Other Modes (Center Weighted, Closest Priority, Focusing Priority) | |
| Reliability Point | Detection of GDEF (j) Not Possible | Detection of GDEF (j) Possible |
| P3 (i) | 0 | 1 |

Table 4-3 Reliability Point

| Focus Detection Mode / Reliability Point | Other Modes (Center Weighted, Closest Priority, Focusing Priority) | |
|---|---|---|
| | Detection of GDEF (j) Not Possible | Detection of GDEF (j) Possible |
| P3 (i) | 0 | $(\Sigma_j (E(j) * SLOP(j)))/\delta$ j are areas belonging to group i. $\delta$ is a predetermined value. When $\delta$ is 1 or greater, it is cut to 1. |

Table 5

| Focus Detection Weight Mode | Reliability Priority | Other Modes (Center Weighted, Closest Priority, Focusing Priority) |
|---|---|---|
| W (j) | E(j)*SLOP(j) | 1 |
| | | When E(j)*SLOP(j)>V, E(j)*SLOP(j) |
| | | When E(j)*SLOP(j)≤V, |

Table 6-1

| DEF (j) and SLOP (j) of Each Area | | | |
|---|---|---|---|
| AREA | DEF (µm) | SLOP | GRP |
| 1 | 280 | 880 | 1 |
| 2 | 300 | 1240 | 1 |
| 3 | 320 | 1180 | 1 |
| 4 | -1680 | 540 | 2 |
| 5 | -1720 | 820 | 2 |
| 6 | 330 | 750 | 1 |
| 7 | 320 | 1200 | 1 |
| 8 | 340 | 940 | 1 |

Table 6-2

| Point of Each Group | | | | | | | | |
|---|---|---|---|---|---|---|---|---|
| Focus Detection Mode | Center Weighted Mode | | Closes Priority Mode | | Focusing Priority Mode | | Reliability Priority Mode | |
| Group GRP | 1 | 2 | 1 | 2 | 1 | 2 | 1 | 2 |
| Group Defocu Amount | 320 | Not Possible | 314 | -1693 | 314 | -1693 | 314 | -1693 |
| Closes Priority Point P1 | 1 | 0 | 1 | .5 | 1 | 1 | 1 | 1 |
| Focusing Priority Point P2 | 1 | 0 | 1 | .8 | 1 | .5 | 1 | .8 |
| Reliability Point P3 | 1 | 0 | 1 | 1 | 1 | 1 | 1 | .19 |
| Total Point (Product) PG | 1 | 0 | 1 | .4 | 1 | .5 | 1 | .15 |
| Optimum Group | 1 | | 1 | | 1 | | 1 | |
| Optimum Defocus Amount | 320 | | 315 | | 315 | | 314 | |

## Claims

1. A focus detecting device, comprising:

an image forming optical system;

means for detecting a defocus amount with respect to a predetermined plane of a plurality of images, formed by said image forming optical system, of fields corresponding to a plurality of detection areas which are set beforehand;

means for classifying said plurality of detection areas into a plurality of groups on the basis of said defocus amount;

means for selecting one optimum group from said plurality of groups; and

means for determining one final defocus amount on the basis of said defocus amount corresponding to the detection area belonging to the optimum group.

2. A focus detecting device according to claim 1, wherein said classifying means includes means for determining a zone indicating a range of the difference in the defocus amount which objects can be regarded as the same and means for comparing the defocus amount of the remaining detection areas with respect to at least one defocus amount of said plurality of detection areas.

3. A focus detecting device according to claim 2, wherein said classifying means classifies detection areas having the defocus amount which falls withing a zone with the defocus amount of said one detection areas are a reference.

4. A focus detecting device according to claim 2, wherein said classifying means classifies detection areas on the basis of positional relationship of said detection areas and said defocus amounts.

5. A focus detecting device according to claim 1, wherein said selection means includes means for evaluating each group on the basis of the information about an object corresponding to a detection area belonging to each of said classified groups.

6. A focus detecting device according to claim 1, wherein said selection means includes means for evaluating each group on the basis of a plurality of informations selected from an information about the defocus amount, an information about the position of detection areas and the information about the contrast of an image.

7. A focus detection device according to claim 1, wherein said selection means includes a mode selection and means for determining a weight for evaluation of each detection area corresponding to said classified group in response to the selection by the mode selector.

8. A focus detection device according to claim 1, wherein said selection means includes means for determining the selection order of said plurality of groups by evaluating said each classified group according to a predetermined algorithm.

9. A focus detecting deivce according claim 1 further comprising means for displaying detection areas belonging to said selected group, and wherein said selection means further includes switch means for changing in turn a group of the highest selection order which is initially selected to another group in accordance with said selection order.

10. A focus detecting device according to claim 1 further comprising means for displaying the positions of detection areas belonging to said selected optimum group.

11. A focus detecting device according to claim 10 further comprising said display means includes a plurality of display elements positioned respectively in correspondence with the position of said plurality of detection areas and means for driving one or more display elements from said plurality of display elements in response to said selection means.

12. A camera, comprising:
a photographing optical system;
means for detecting the defocus amount with respect to a predetermined plane of a plurality of images, formed by said photographing optical system, of fields corresponding to a plurality of detection areas which are set beforehand;
means for classifying said plurality of detection areas into a plurality of groups on the basis of said defocus amount;
means for selecting one optimum group from said plurality of groups;
means for determining one final defocus amount on the basis of said defocus amount corresponding to the detection areas belonging to the optimum group; and
means for moving said photographing optical system according to said determined defocus amount.

13. A camera according to claim 12, wherein said photographing optical system includes an aperture device having a variable F-number, and said classifying means includes means for determining a zone indicating the range of difference in the defocus amounts which can be regarded as the same object in response to the F-number of said photographing optical system and means for comparing the defocus amount of the remaining detection areas with the defocus amount of at least one of said plurality of detection areas.

14. A camera according to claim 13, wherein said classifying means classifies the detection areas having the defocus amount which falls within the zone with the defocus amount of said one detection area as reference, as the same group.

15. A camera according to claim 12 further comprising finder optical system for observing said field and a means for displaying the positions of detection areas belonging to said selected optimum group within said finder optical system.

16. A camera according to claim 15, wherein said display means includes a plurality of display elements positioned respectively in correspondence with the positions of said plurality of detection areas and means for driving one or more display elements from said plurality of display elements in response to said selection means.

17. A camera, comprising:
a photographing optical system including an aperture device;
means for determining the aperture value of said photographing optical system;
means for detecting the defocus amount with respect to a predetermined plane of a plurality of images, formed by said photographing optical system, of fields corresponding to a plurality of detection areas which are set beforehand;
means for selecting at least one of a plurality of detection areas in response to said determined aperture value; and
means for moving said phohtographing optical system according to said defocus amount corresponding to the selected detection area.

18. A camera according to claim 17, wherein said selection means includes means for classifying said plurality of detection areas into a plurality of groups on the basis of an information including said defocus amount and selects one of said plurality of groups in response to said aperture value.

19. A focusing display device, comprising:
an image forming optical system;
means for detecting the defocus amount with respect to a predetermined plane of a plurality of images, formed by said image forming optical system, of fields respectively corresponding to a plurality of detection areas which are set beforehand:
display means having a plurality of display sections positionally corresponding to said plurality of detection areas;
means for classifying said plurality of detection areas into a plurality of groups on the basis of said defocus

amount;
means for selecting one group from said plurality of groups; and means for driving said display sections corresponding to the detection areas belonging to said selected group.

20. A focusing display device according to claim 19, wherein said display means includes a plurality of display elements positioned respectively corresponding to said plurality of detection areas.

21. A focusing display device according to claim 19, wherein said detection means includes a plurality of light-receiving devices which are made to correspond to said plurality of detection areas and are positioned distributed on said predetermiend plane in a predetermined form of a pattern, said display means including a plurality of display elements positioned distributed in a substantially same form of a pattern as that of said predetermined pattern.

22. A focusing display device according to claim 18, wherein said selection means includes means for detecting said one group according to a predetermined algorithm and switch means handled to change said determined group to another group, and wherein said driving means drives said display sections corresponding to detection areas belonging to said determined group.

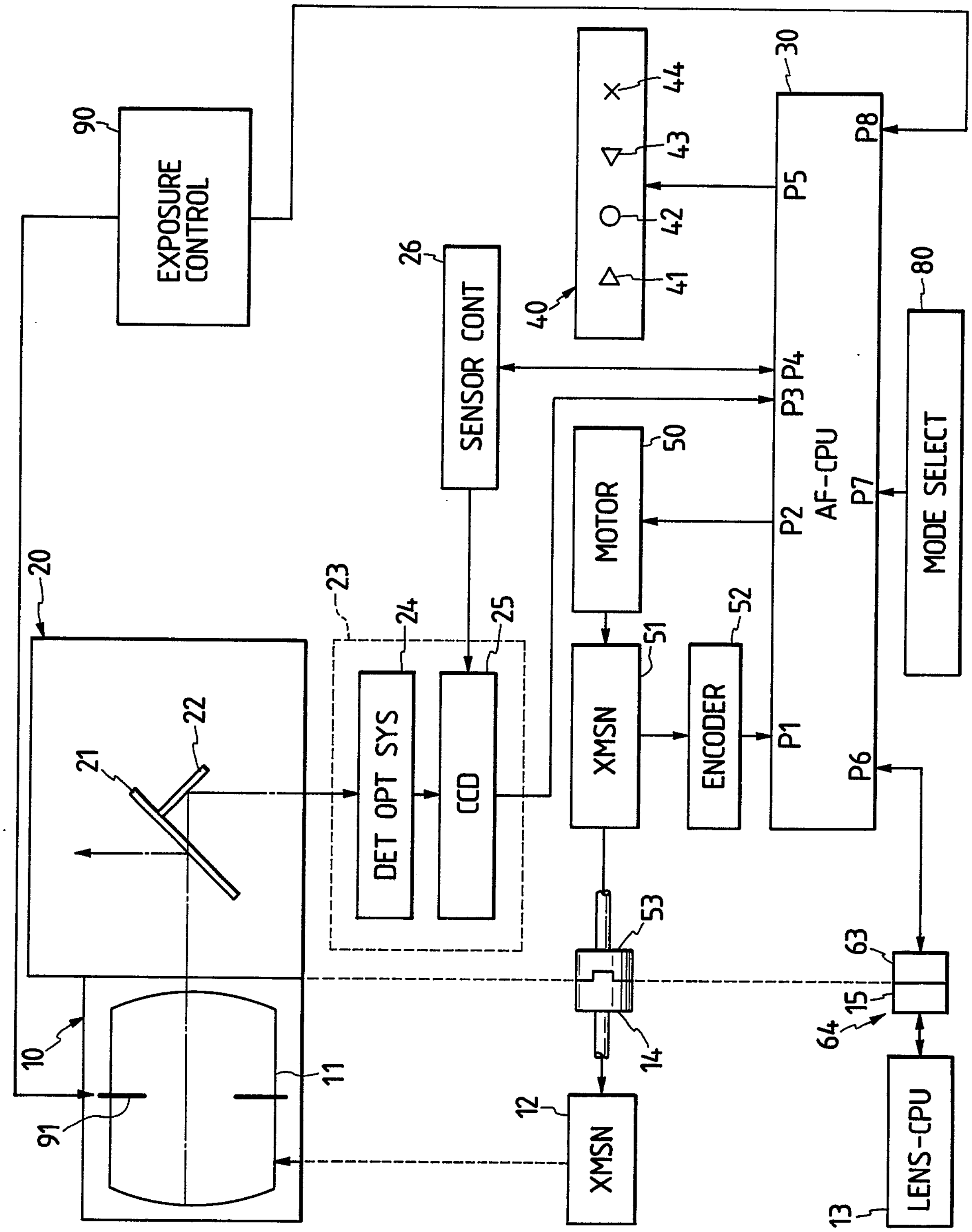
EXPOSURE CONTROL
SENSOR CONT
DET OPT SYS
CCD
MOTOR
XMSN
ENCODER
AF-CPU
P1
P2
P3
P4
P5
P6
P7
P8
MODE SELECT
XMSN
LENS-CPU

FIG. 1

FIG. 2

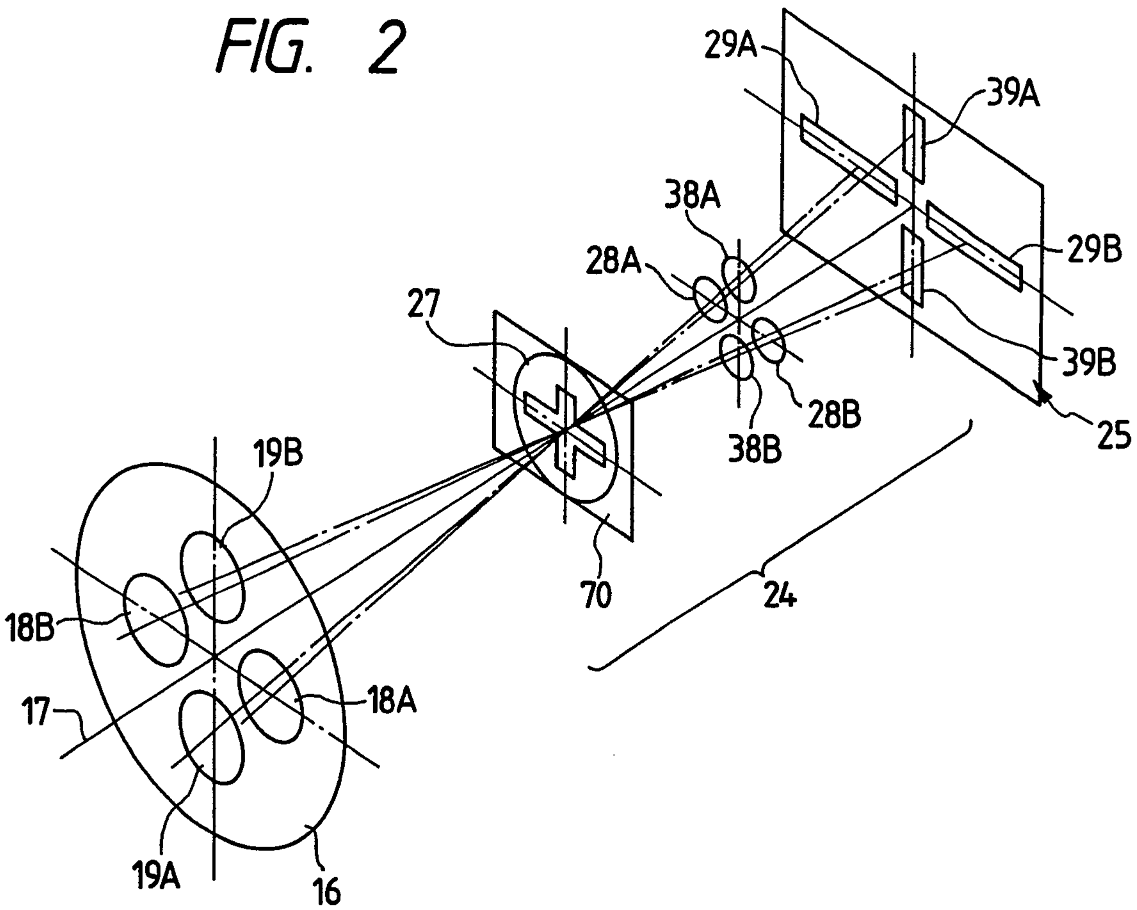
29A
39A
38A
28A
29B
27
39B
28B
25
38B
19B
70
24
18B
18A
17
19A
16

FIG. 3

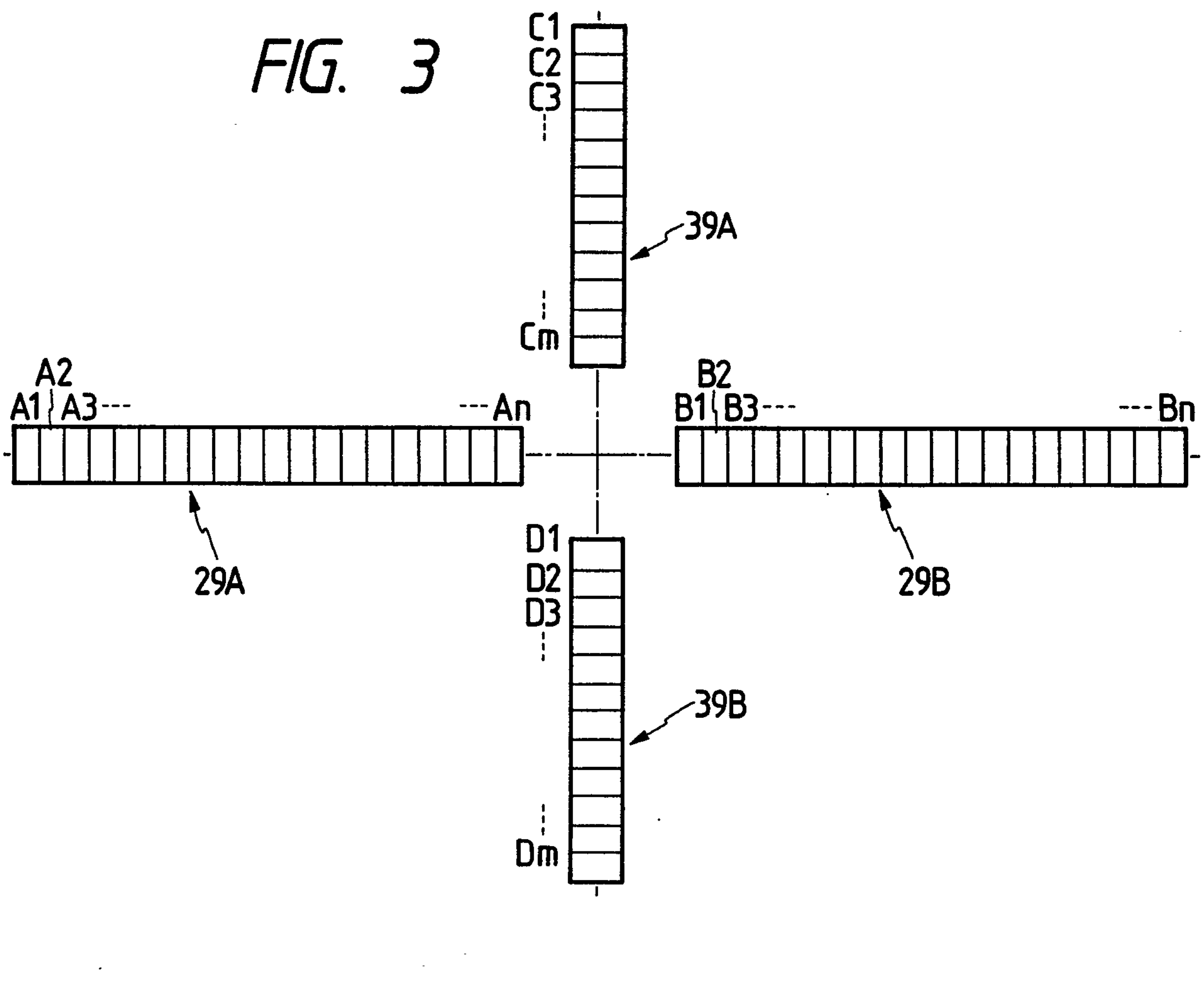
C1
C2
C3
39A
Cm
A2
A1 A3 ---
--- An
B2
B1 B3 ---
--- Bn
29A
29B
D1
D2
D3
39B
Dm

FIG. 4

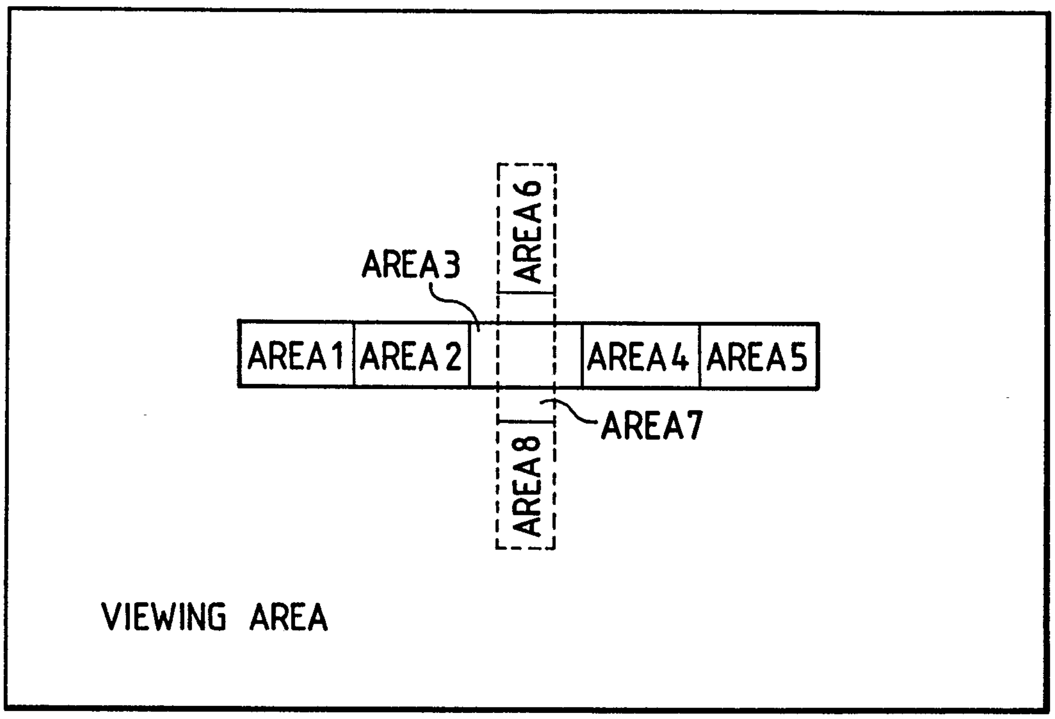
AREA 6
AREA 3
AREA 1
AREA 2
AREA 4
AREA 5
AREA 7
AREA 8
VIEWING AREA

FIG. 5

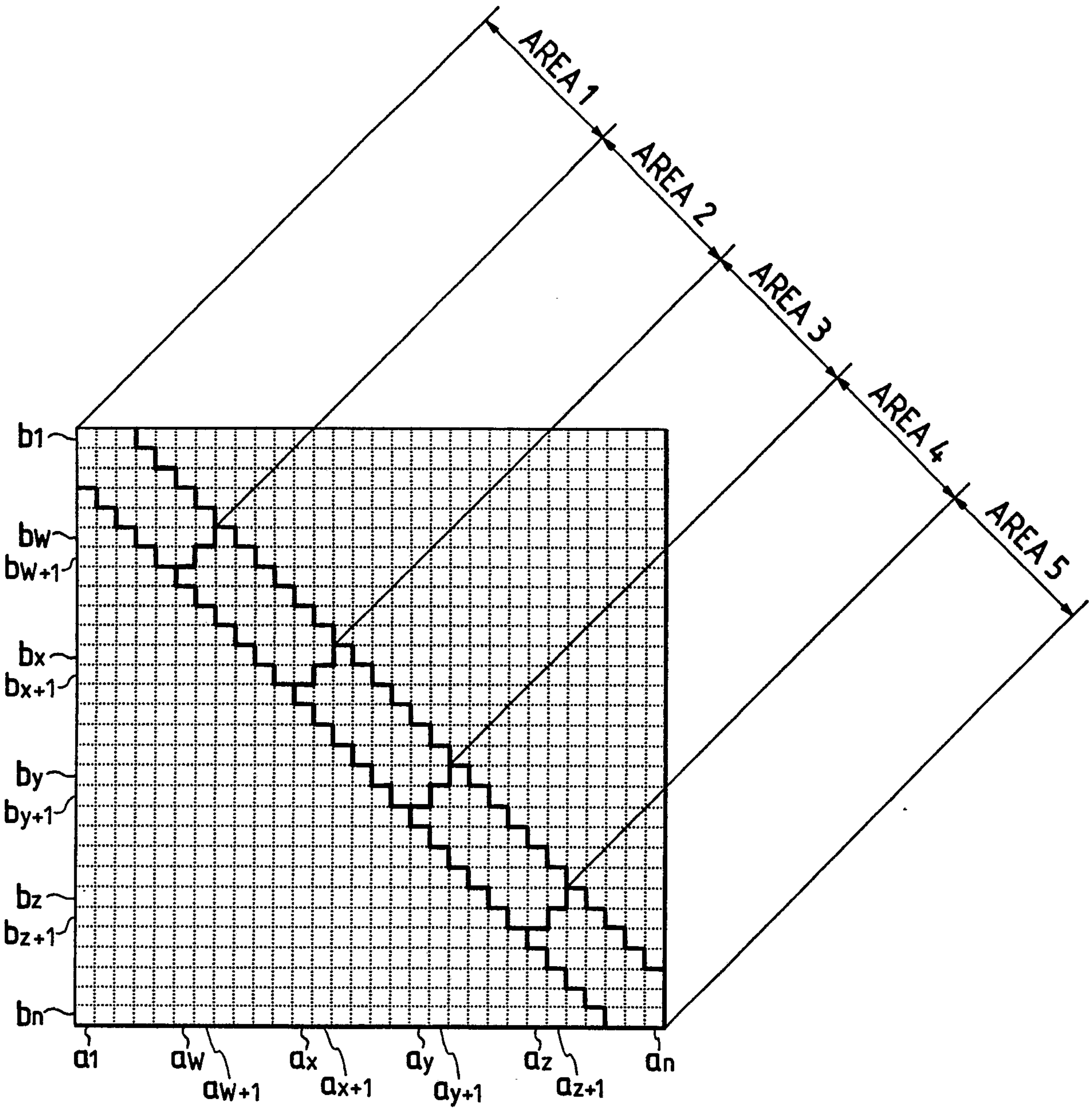
AREA 1
AREA 2
AREA 3
AREA 4
AREA 5
b1
bw
bw+1
bx
bx+1
by
by+1
bz
bz+1
bn
a1
aw
aw+1
ax
ax+1
ay
ay+1
az
az+1
an

FIG. 6

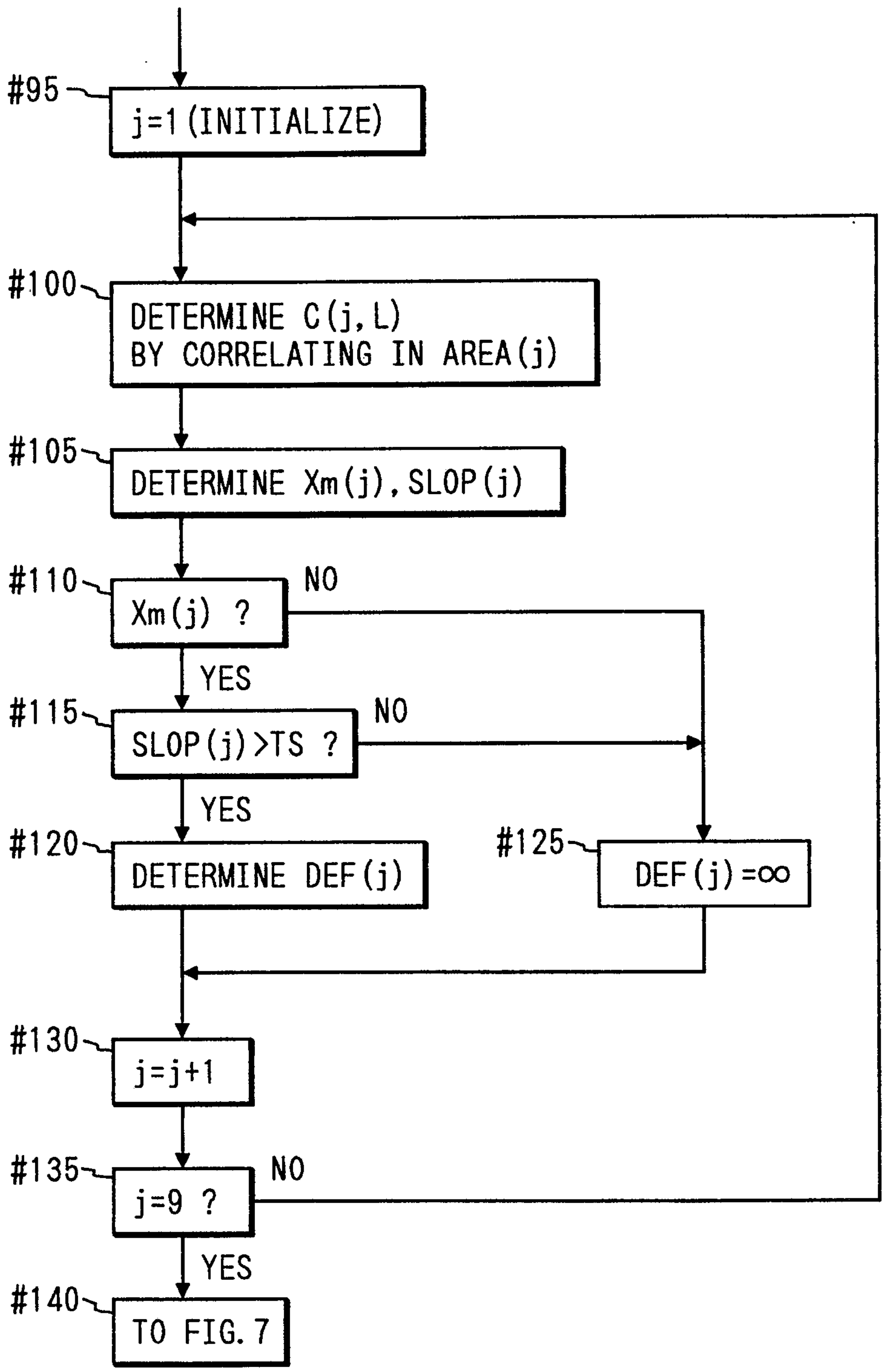
#95
j=1 (INITIALIZE)
#100
DETERMINE C(j, L)
BY CORRELATING IN AREA(j)
#105
DETERMINE Xm(j), SLOP(j)
#110
Xm(j) ?
NO
YES
#115
SLOP(j)>TS ?
NO
YES
#120
DETERMINE DEF(j)
#125
DEF(j)=∞
#130
j=j+1
#135
j=9 ?
NO
YES
#140
TO FIG. 7

FIG. 7

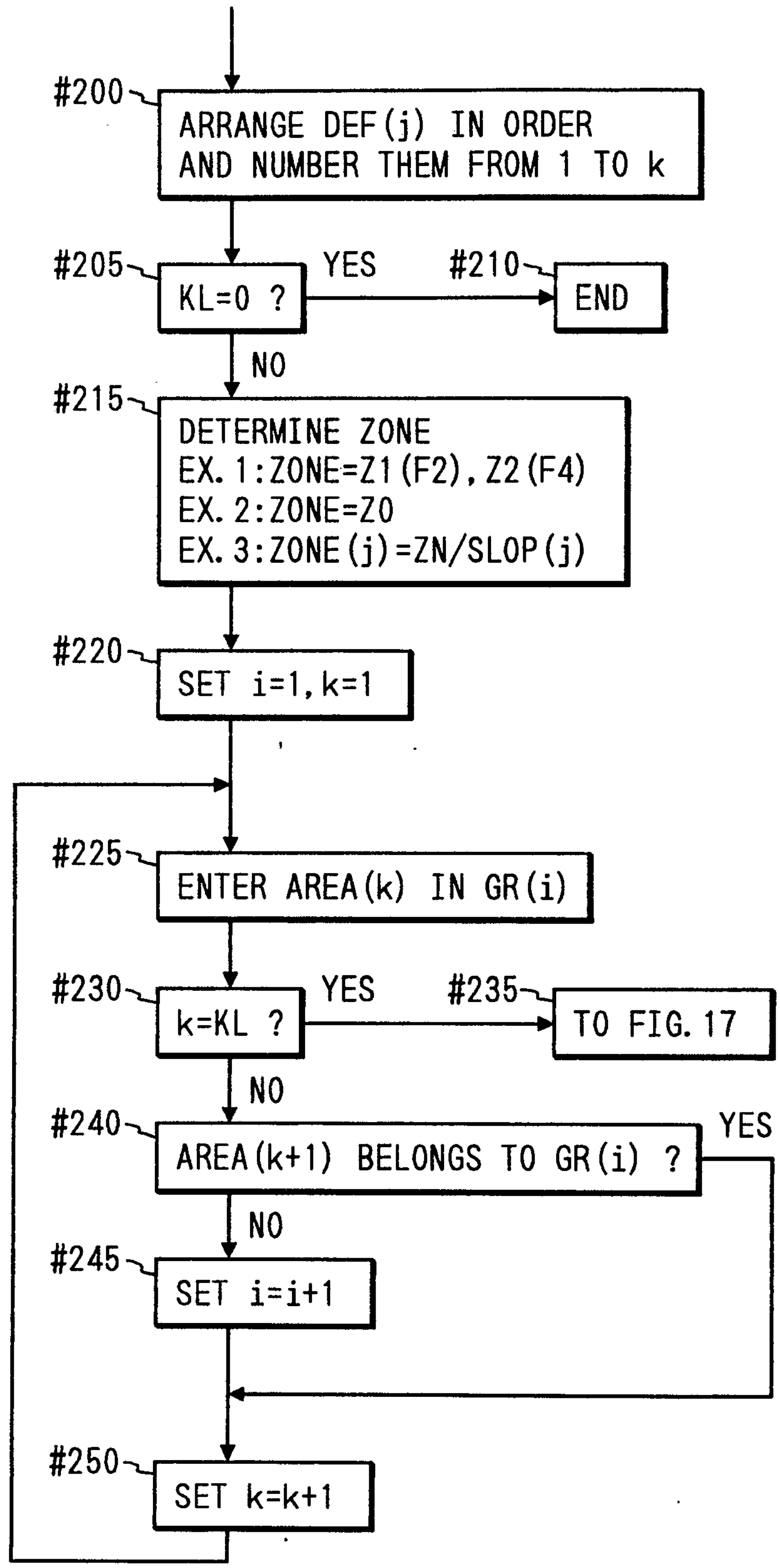
#200
ARRANGE DEF(j) IN ORDER AND NUMBER THEM FROM 1 TO k
#205
KL=0 ?
YES
#210
END
NO
#215
DETERMINE ZONE
EX. 1:ZONE=Z1(F2), Z2(F4)
EX. 2:ZONE=Z0
EX. 3:ZONE(j)=ZN/SLOP(j)
#220
SET i=1, k=1
#225
ENTER AREA(k) IN GR(i)
#230
k=KL ?
YES
#235
TO FIG. 17
NO
#240
AREA(k+1) BELONGS TO GR(i) ?
YES
NO
#245
SET i=i+1
#250
SET k=k+1

FIG. 8

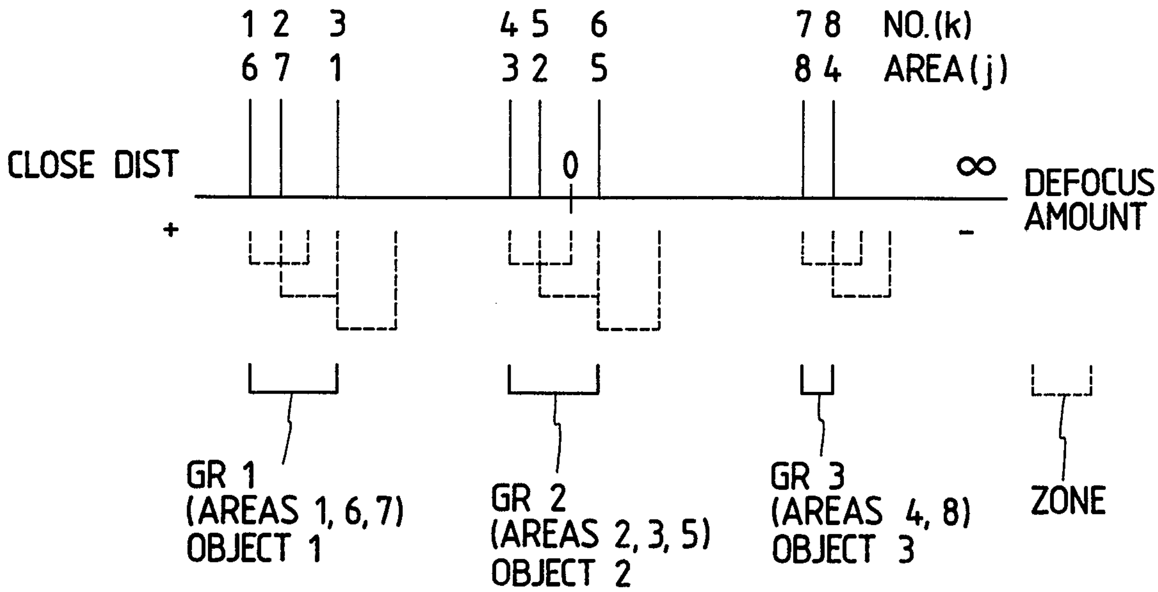

1 2 3 4 5 6 7 8 NO.(k)
6 7 1 3 2 5 8 4 AREA(j)
CLOSE DIST
0
∞
DEFOCUS AMOUNT
+
-
GR 1 (AREAS 1, 6, 7) OBJECT 1
GR 2 (AREAS 2, 3, 5) OBJECT 2
GR 3 (AREAS 4, 8) OBJECT 3
ZONE


FIG. 12

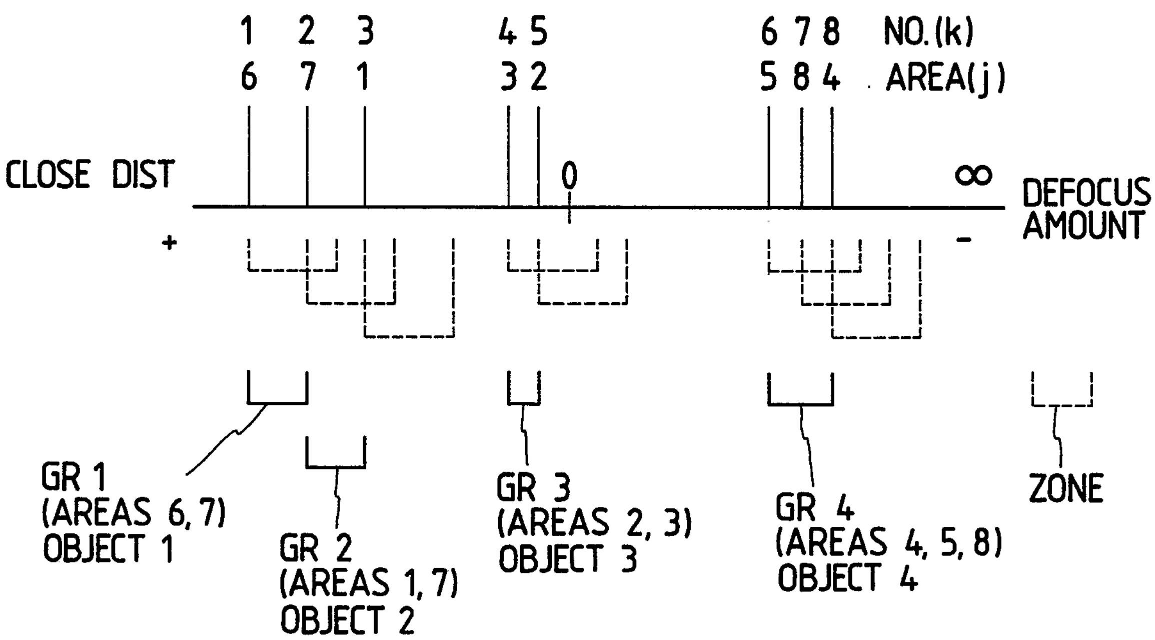

1 2 3 4 5 6 7 8 NO.(k)
6 7 1 3 2 5 8 4 AREA(j)
CLOSE DIST
0
∞
DEFOCUS AMOUNT
+
-
GR 1 (AREAS 6, 7) OBJECT 1
GR 2 (AREAS 1, 7) OBJECT 2
GR 3 (AREAS 2, 3) OBJECT 3
GR 4 (AREAS 4, 5, 8) OBJECT 4
ZONE

FIG. 9A

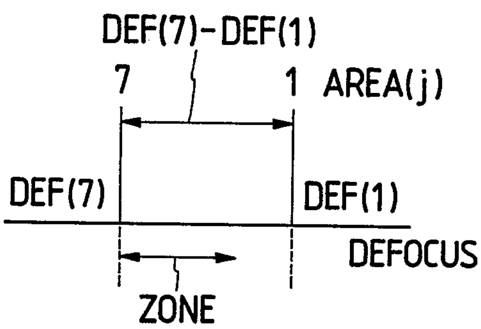


FIG. 9B

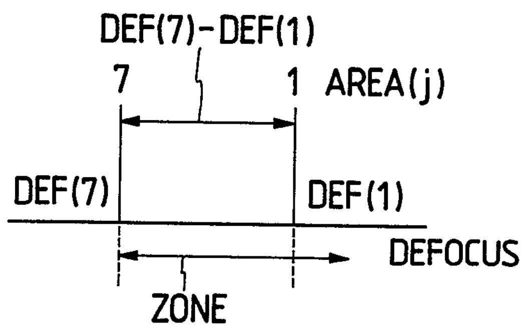


FIG. 10A

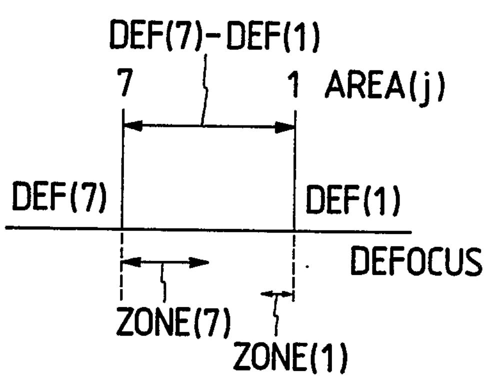


FIG. 10B

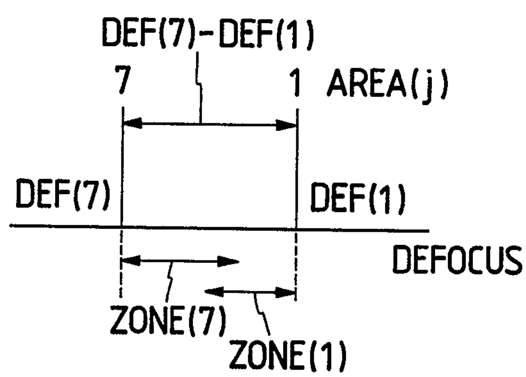

FIG. 11

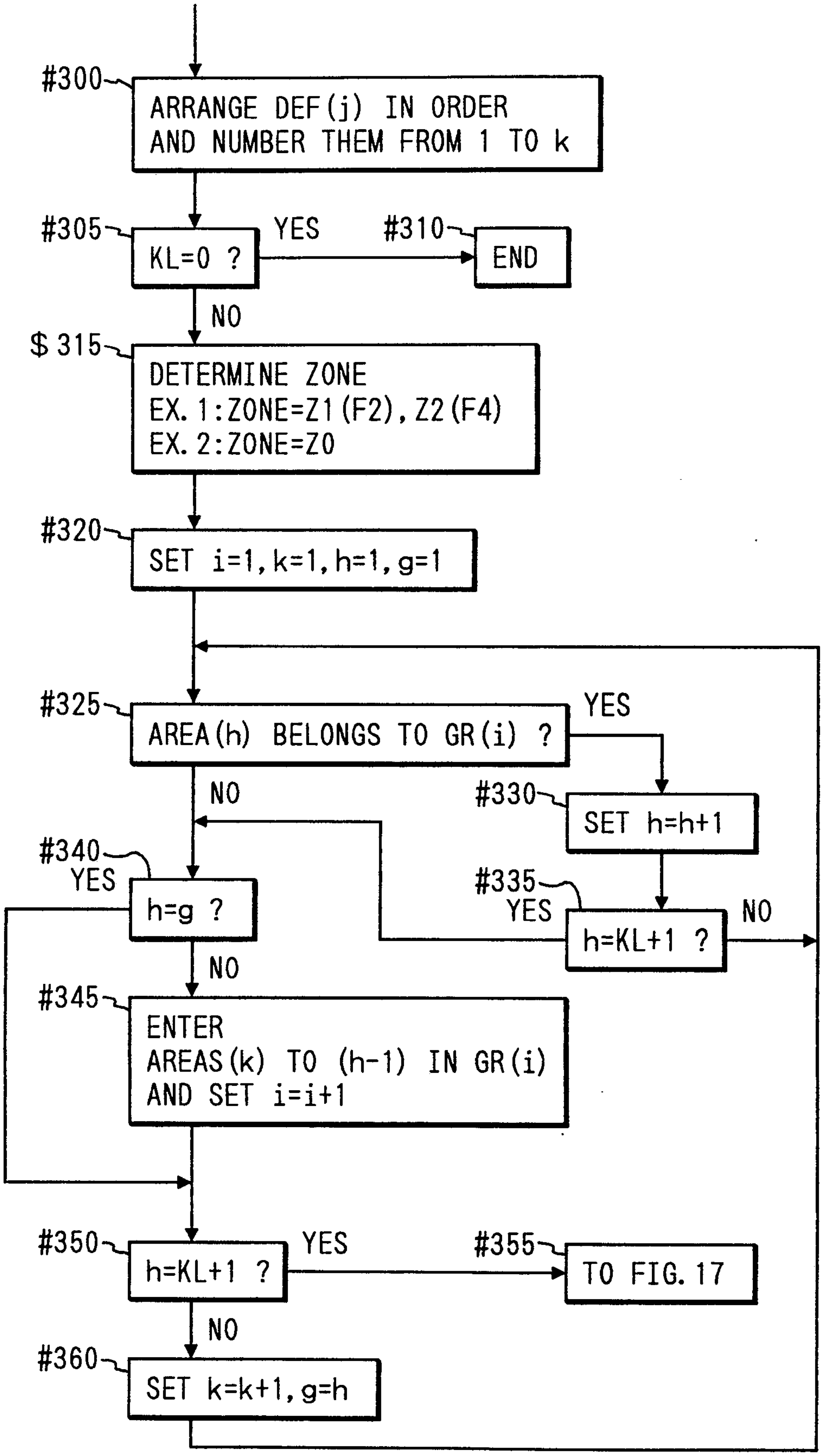
#300
ARRANGE DEF(j) IN ORDER AND NUMBER THEM FROM 1 TO k
#305
KL=0 ?
YES
#310
END
NO
$ 315
DETERMINE ZONE
EX. 1:ZONE=Z1(F2), Z2(F4)
EX. 2:ZONE=Z0
#320
SET i=1, k=1, h=1, g=1
#325
AREA(h) BELONGS TO GR(i) ?
YES
#330
SET h=h+1
NO
#340
YES
h=g ?
#335
YES
h=KL+1 ?
NO
NO
#345
ENTER AREAS(k) TO (h-1) IN GR(i) AND SET i=i+1
#350
h=KL+1 ?
YES
#355
TO FIG. 17
NO
#360
SET k=k+1, g=h

FIG. 13

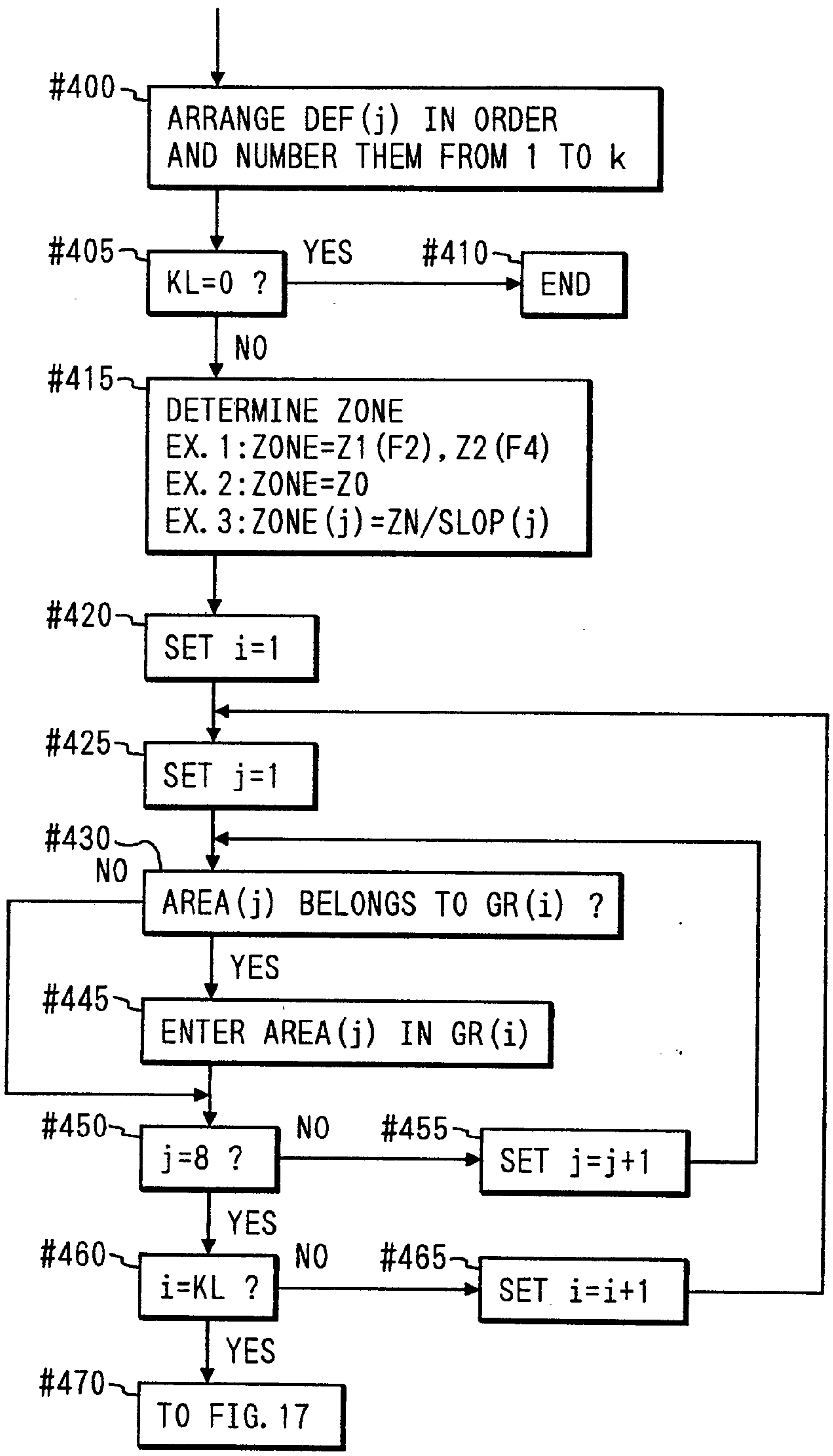
#400
ARRANGE DEF(j) IN ORDER AND NUMBER THEM FROM 1 TO k
#405
KL=0 ?
YES
#410
END
NO
#415
DETERMINE ZONE
EX. 1:ZONE=Z1(F2), Z2(F4)
EX. 2:ZONE=Z0
EX. 3:ZONE(j)=ZN/SLOP(j)
#420
SET i=1
#425
SET j=1
#430
NO
AREA(j) BELONGS TO GR(i) ?
YES
#445
ENTER AREA(j) IN GR(i)
#450
j=8 ?
NO
#455
SET j=j+1
YES
#460
i=KL ?
NO
#465
SET i=i+1
YES
#470
TO FIG. 17

FIG. 14

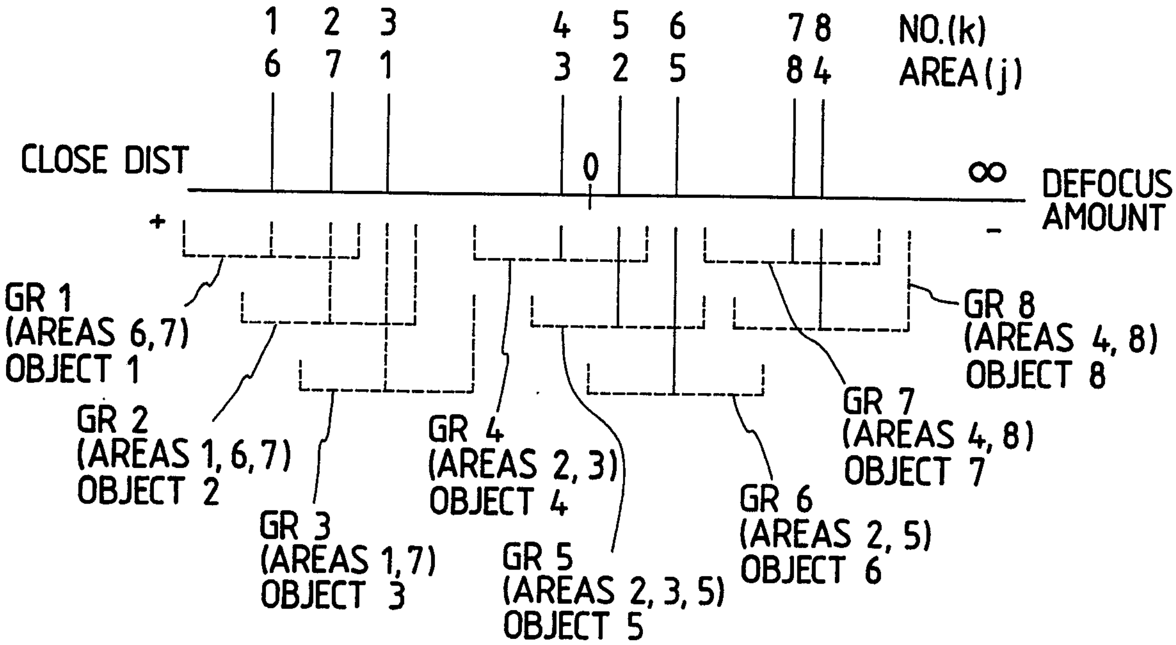
1 2 3 4 5 6 7 8 NO.(k)
6 7 1 3 2 5 8 4 AREA(j)
CLOSE DIST
0
∞
DEFOCUS AMOUNT
+
-
GR 1 (AREAS 6,7) OBJECT 1
GR 2 (AREAS 1, 6, 7) OBJECT 2
GR 3 (AREAS 1,7) OBJECT 3
GR 4 (AREAS 2, 3) OBJECT 4
GR 5 (AREAS 2, 3, 5) OBJECT 5
GR 6 (AREAS 2, 5) OBJECT 6
GR 7 (AREAS 4, 8) OBJECT 7
GR 8 (AREAS 4, 8) OBJECT 8

FIG. 16

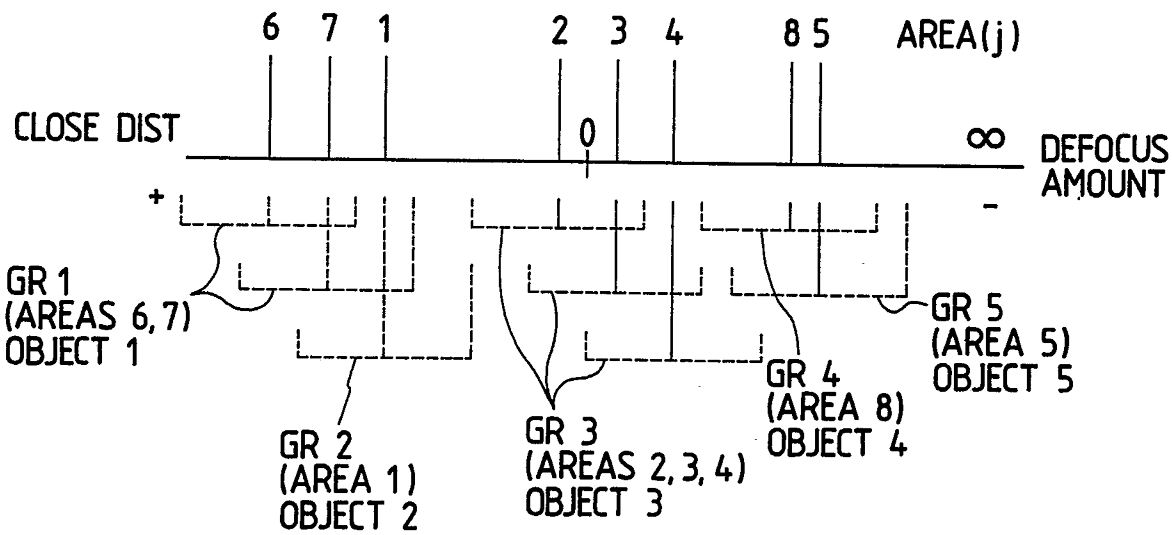
6 7 1 2 3 4 8 5 AREA(j)
CLOSE DIST
0
∞
DEFOCUS AMOUNT
+
-
GR 1 (AREAS 6, 7) OBJECT 1
GR 2 (AREA 1) OBJECT 2
GR 3 (AREAS 2, 3, 4) OBJECT 3
GR 4 (AREA 8) OBJECT 4
GR 5 (AREA 5) OBJECT 5

FIG. 15

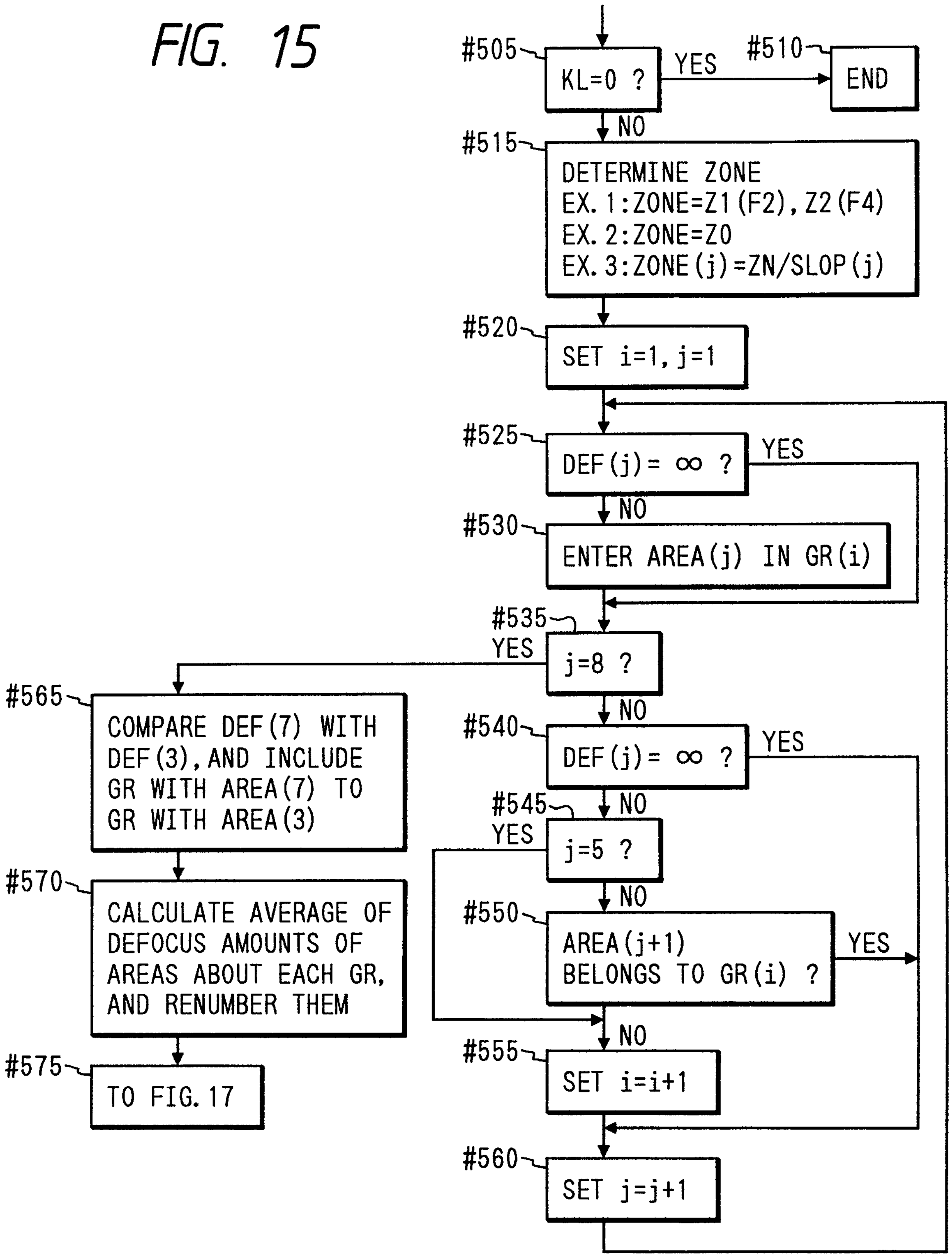
#505
KL=0 ?
YES
#510
END
NO
#515
DETERMINE ZONE
EX. 1:ZONE=Z1 (F2), Z2 (F4)
EX. 2:ZONE=Z0
EX. 3:ZONE (j) =ZN/SLOP (j)
#520
SET i=1, j=1
#525
DEF (j) = ∞ ?
YES
NO
#530
ENTER AREA (j) IN GR (i)
#535
YES
j=8 ?
NO
#565
COMPARE DEF (7) WITH DEF (3), AND INCLUDE GR WITH AREA (7) TO GR WITH AREA (3)
#540
DEF (j) = ∞ ?
YES
#545
NO
YES
j=5 ?
#570
CALCULATE AVERAGE OF DEFOCUS AMOUNTS OF AREAS ABOUT EACH GR, AND RENUMBER THEM
NO
#550
AREA (j+1) BELONGS TO GR (i) ?
YES
NO
#555
SET i=i+1
#575
TO FIG. 17
#560
SET j=j+1

FIG. 17

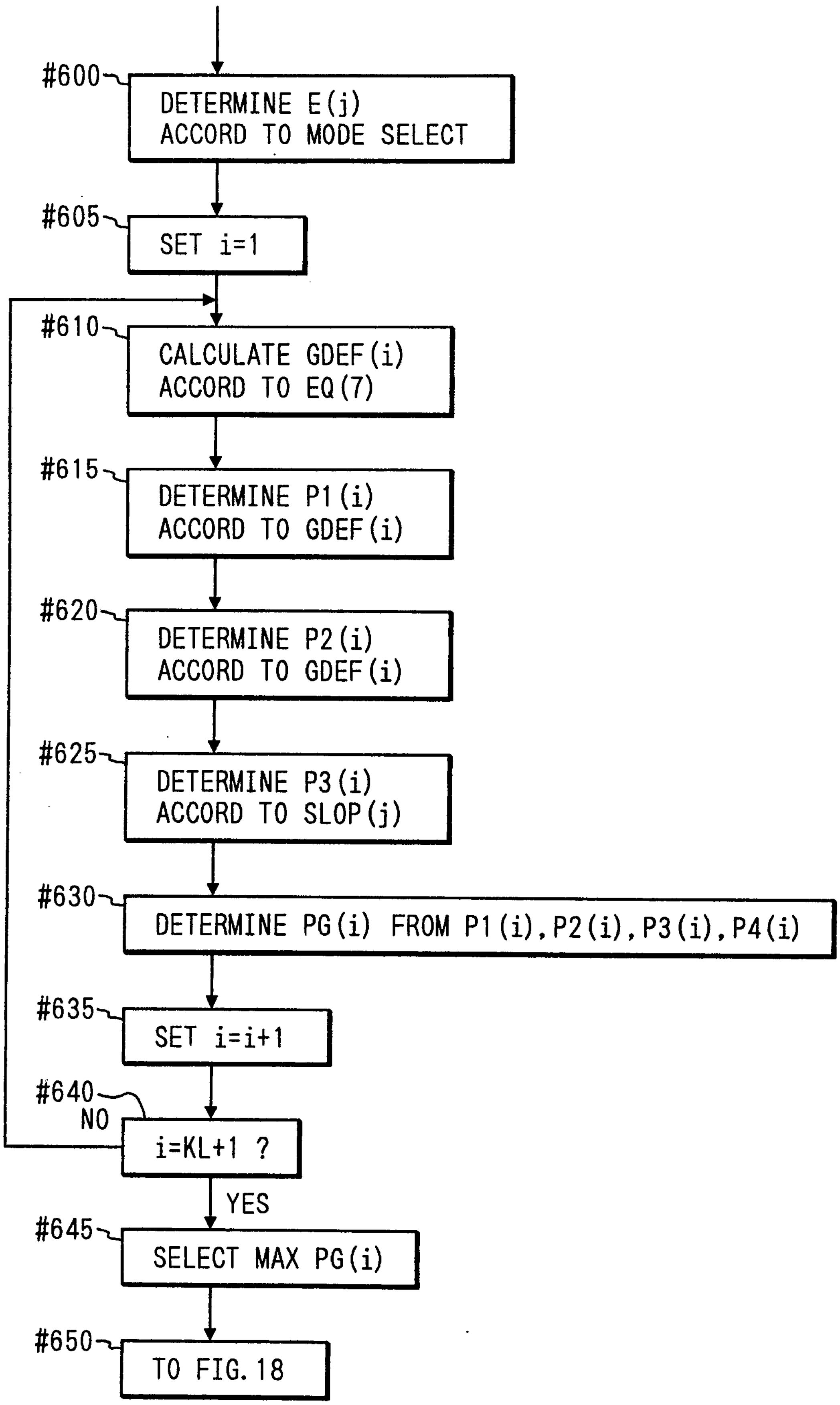
#600
DETERMINE E(j) ACCORD TO MODE SELECT
#605
SET i=1
#610
CALCULATE GDEF(i) ACCORD TO EQ(7)
#615
DETERMINE P1(i) ACCORD TO GDEF(i)
#620
DETERMINE P2(i) ACCORD TO GDEF(i)
#625
DETERMINE P3(i) ACCORD TO SLOP(j)
#630
DETERMINE PG(i) FROM P1(i), P2(i), P3(i), P4(i)
#635
SET i=i+1
#640
NO
i=KL+1 ?
YES
#645
SELECT MAX PG(i)
#650
TO FIG. 18

FIG. 18

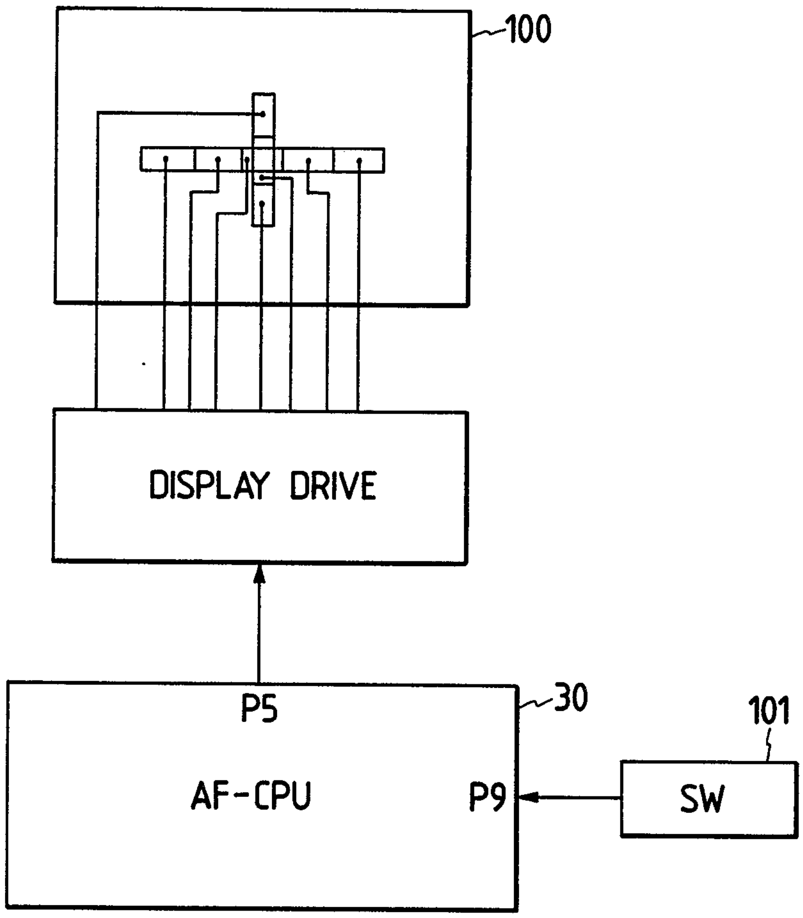

FIG. 19

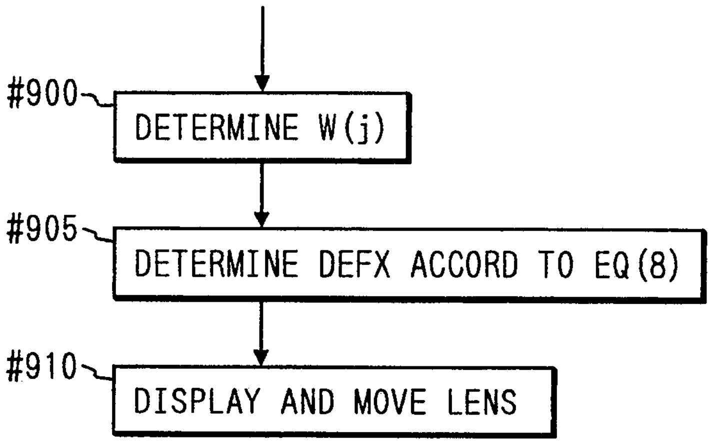
#900
DETERMINE W(j)
#905
DETERMINE DEFX ACCORD TO EQ(8)
#910
DISPLAY AND MOVE LENS

FIG. 20

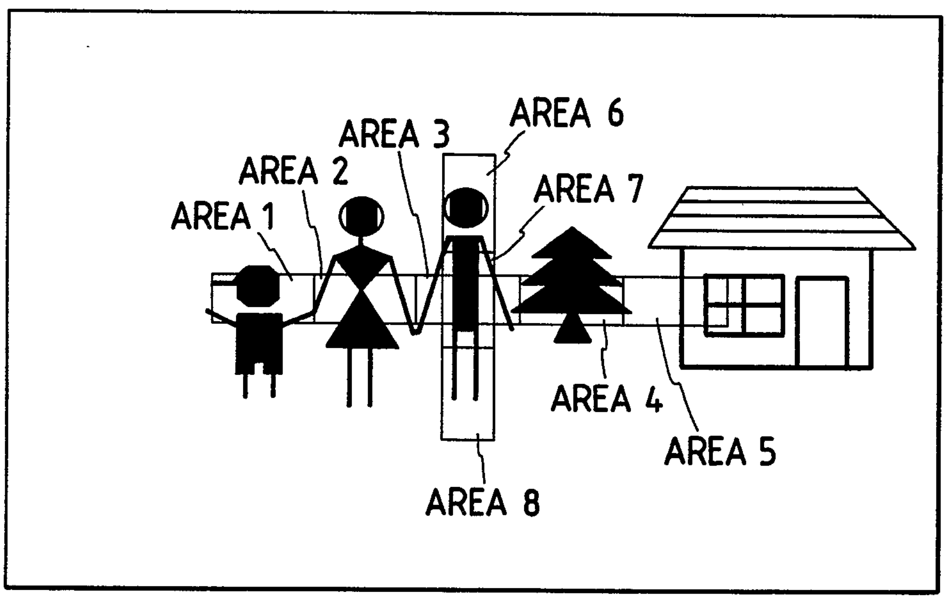
AREA 6
AREA 3
AREA 2
AREA 7
AREA 1
AREA 4
AREA 5
AREA 8

European Patent Office

# EUROPEAN SEARCH REPORT

Application Number

EP 89 31 3669

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 077 448 (SAMUELSON FILM SERVICE LTd.) * the whole paper * | 1,5,12 | G 02 B 7/34 |
| Y | | 6,9-11, 15-21 | |
| A | | 2-4,7,8 ,13,14, 22 | |
| | --- | | |
| Y | US-A-4 746 947 (M. NAKAI) * abstract; figures 1-4,7,8; column 1, line 1 - column 3, line 30; claims 1,4,5 * | 6 | |
| A | | 1-5,7,8 ,12 | |
| | --- | | |
| Y | DE-A-3 211 234 (OLYMPUS OPTICAL CO., LTD.) * abstract; claims 1-4; page 5; figures 8,9 * | 9-11,15 ,16,19-21 | |
| A | | 22 | |
| | --- | | TECHNICAL FIELDS SEARCHED (Int. Cl.5) |
| Y | GB-A-2 196 134 (CANON) * abstract; figures 1,5,6; page 7, left-hand column, line 14 - right-hand column, line 76; claims 4,9-11 * | 17,18 | G 02 B<br>H 04 N<br>G 03 B |
| A | | 1-8,12-14,22 | |
| | --- -/- | | |

The present search report has been drawn up for all claims

| Place of search | Date of completion of the search | Examiner |
|---|---|---|
| BERLIN | 28-03-1990 | MANNTZ W W |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number

EP 89 31 3669

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 8, no. 226 (E-272)(1663), 17 October 1984; & JP - A - 59 107 685 (SANYO DENKI K.K.) 21.06.1984 --- | 1,12,17,19 | |
| A | EP-A-0 152 496 (OLYMPUS OPTICAL CO., LTD.) * abstract; page 4, lines 23-31; figures 1-5 * ----- | 9-11 | |
| | | | TECHNICAL FIELDS SEARCHED (Int. Cl.5) |

The present search report has been drawn up for all claims

| Place of search | Date of completion of the search | Examiner |
|---|---|---|
| BERLIN | 28-03-1990 | MANNTZ W W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)